# EUROPEAN PATENT APPLICATION

(11) **EP 4 697 805 A1**
(43) Date of publication of application: **18.02.2026**
(21) Application number: 24814346.3
(22) Date of filing: 24.05.2024
(51) Int. Cl.: H04W 36/00

(54) **HANDOVER METHOD AND APPARATUS**

(30) Priority: 02.06.2023 CN 202310651626
(71) Applicant: Huawei Technologies Co., Ltd., Shenzhen, Guangdong 518129 (CN)
(72) Inventor: YUAN, Shitong, Shenzhen, Guangdong 518129 (CN); GU, Zhifang, Shenzhen, Guangdong 518129 (CN)
(74) Representative: Goddar, Heinz J.
(86) International application number: PCT/CN2024/095277
(87) International publication number: WO 2024/245149

(57) **Abstract**

This application provides a handover method and apparatus. The method includes: A terminal device receives a handover command from a first access network device, where the handover command instructs the terminal device to be handed over from a first cell to a second cell, the terminal device keeps connected to the first cell within a time range from a first moment to a second moment, the first moment is a moment at which the terminal device receives the handover command, the second moment is later than the first moment, the first access network device is a current serving access network device of the terminal device, and the first cell is a cell served by the first access network device. The terminal device keeps connected to the first cell within the time range from the first moment to the second moment, so that communication interruption time of the terminal device can be reduced.

## Description

This application claims priority to Chinese Patent Application No. 202310651626.8, filed on June 2, 2023 and entitled "HANDOVER METHOD AND APPARATUS", which is incorporated herein by reference in its entirety.

### TECHNICAL FIELD

This application relates to the communication field, and more specifically, to a handover method and apparatus.

### BACKGROUND

In a conventional handover technology, after a terminal device receives a handover command sent by a source access network device by using radio resource control (radio resource control, RRC) signaling/layer 3 (layer 3, L3) signaling, the terminal device sends a random access request message to a target access network device, and the target access network device calculates, based on the received random access request message, an uplink timing advance needed by the terminal device. Because the terminal device sends the random access request message to the target access network device, the target access network device may consider the random access request message as an arrival indication of the terminal device. After receiving the random access request message, the target access network device considers that the terminal device is handed over to a target serving cell served by the target access network device, and may start to schedule the terminal device.

Currently, a 3rd generation partnership project (3rd generation partnership project, 3GPP) standard conference discusses that a terminal device performs cell switch based on layer 1 (layer 1, L1)/layer 2 (layer 2, L2) signaling. In a process of performing cell switch based on the L1/L2 signaling, the terminal device is allowed to send a random access request to a target access network device before receiving a switch command, to obtain an uplink timing advance. After receiving the switch command, the terminal device is disconnected from a source serving cell, and can communicate with a target serving cell only when a start moment of a periodic uplink grant resource of the target serving cell is reached. Consequently, the terminal device cannot communicate with the source serving cell and the target serving cell within a period of time after receiving the switch command, and communication is interrupted, especially when the uplink grant resource of the target serving cell has a large periodicity and a delivery moment of the switch command is exactly an end moment of a previous resource periodicity.

### SUMMARY

This application provides a handover method and apparatus, to reduce communication interruption time of a terminal device.

According to a first aspect, a handover method is provided. The method may be performed by a terminal device or a chip or a chip system in the terminal device. The method includes: The terminal device receives a handover command from a first access network device, where the handover command instructs the terminal device to be handed over from a first cell to a second cell, the terminal device keeps connected to the first cell within a time range from a first moment to a second moment, the first moment is a moment at which the terminal device receives the handover command, the second moment is later than the first moment, the first access network device is a current serving access network device of the terminal device, and the first cell is a cell served by the first access network device. The "second moment" may be understood as a moment at which the terminal device releases a connection to the first cell.

According to the foregoing technical solution, the terminal device keeps connected to the first cell within the time range from the first moment to the second moment, the first moment is a moment at which the terminal device receives the handover command, and the second moment is later than the first moment, to avoid a case in which the terminal device immediately is disconnected from the first cell after receiving the handover command, thereby reducing communication interruption time of the terminal device.

**In** a possible implementation, the terminal device sends first information to a second access network device at a third moment, where the first information indicates that the terminal device is already handed over to the second cell, the second cell is a cell served by the second access network device, and the third moment is later than the first moment. According to the foregoing solution, the second access network device may determine, based on the first information sent by the terminal device, that the terminal device is already handed over to the second cell served by the second access network device, to avoid a case in which the second access network device does not know when the terminal device is handed over to the second cell served by the second access network device.

**In** a possible implementation, the method further includes: The terminal device receives second information from the first access network device, where the second information includes an uplink resource corresponding to each of at least one candidate cell, and the at least one candidate cell includes the second cell. The terminal device may obtain, based on the second information, an uplink resource corresponding to the second cell.

Optionally, a process in which the terminal device obtains the uplink resource corresponding to the second cell includes two cases. In the first case, after receiving the second information from the first access network device, the terminal device starts to parse the second information, to obtain a part of the uplink resource corresponding to the second cell; and after receiving the handover command from the first access network device, the terminal device continues to parse the second information, to obtain the other part of the uplink resource corresponding to the second cell. In the second case, after receiving the second information from the first access network device, the terminal device does not parse the second information; and after receiving the handover command from the first access network device, the terminal device starts to parse the second information, to obtain the uplink resource corresponding to the second cell. For example, the second information is sent by the first access network device to the terminal device by using a cell group configuration (cell group config). In this case, before receiving the handover command from the first access network device, the terminal device does not parse a preconfigured uplink resource, and the terminal device starts to parse the second information only after receiving the handover command from the first access network device, to obtain the uplink resource corresponding to the second cell.

In a possible implementation, that the terminal device sends the first information to the second access network device at the third moment includes: The terminal device sends the first information to the second access network device at the third moment by using an uplink resource corresponding to the second cell and an uplink timing advance corresponding to the second cell.

Optionally, the terminal device may obtain the uplink timing advance corresponding to the second cell in any one of the following manners: The first access network device sends, to the terminal device by using the handover command, the uplink timing advance corresponding to the second cell; and before receiving the handover command, the terminal device obtains, by using a random access process, the uplink timing advance corresponding to the second cell; or the terminal device obtains, by measuring a downlink reference signal, the uplink timing advance corresponding to the second cell.

In a possible implementation, the second moment includes one or more of the following: a moment at which the terminal device obtains an uplink resource corresponding to the second cell; a start moment of a time domain resource included in the uplink resource that corresponds to the second cell and that is obtained by the terminal device; and a moment at which the terminal device receives first indication information from the first access network device, where the first indication information indicates the terminal device to release a connection to the first cell; or a moment whose time interval with the first moment is greater than or equal to a preset time period.

The moment at which the terminal device obtains the uplink resource corresponding to the second cell may be understood as a moment at which the terminal device completes parsing of the uplink resource corresponding to the second cell after receiving the second information. The start moment of the time domain resource included in the uplink resource corresponding to the second cell may be understood as a start moment of a time domain resource included in an uplink resource that corresponds to the second cell and that is after the first moment and is closest to the first moment.

In a possible implementation, the third moment includes any one of the following: a moment at which the terminal device obtains the uplink resource corresponding to the second cell; or a moment at which the terminal device completes radio frequency switching after obtaining the uplink resource corresponding to the second cell. When the first cell and the second cell are intra-frequency cells, the third moment includes the moment at which the terminal device obtains the uplink resource corresponding to the second cell, and the terminal device may send the first information to the second access network device without performing radio frequency switching. When the first cell and the second cell are inter-frequency cells, the third moment includes the moment at which the terminal device completes radio frequency switching after obtaining the uplink resource corresponding to the second cell, and the terminal device can send the first information to the second access network device only after completing the radio frequency switching.

Optionally, the second moment and the third moment are a same moment. For example, the second moment and the third moment are the moment at which the terminal device obtains the uplink resource corresponding to the second cell.

Optionally, the second moment is earlier than the third moment. For example, the second moment is the moment at which the terminal device obtains the uplink resource corresponding to the second cell, and the third moment is the moment at which the radio frequency switching is completed after the uplink resource corresponding to the second cell is obtained.

Optionally, that the second moment is later than the third moment may be understood as that the third moment is between the first moment and the second moment. For example, the second moment is the start moment of the time domain resource included in the uplink resource that corresponds to the second cell and that is obtained by the terminal device, and the third moment is the moment at which the terminal device obtains the uplink resource corresponding to the second cell.

In a possible implementation, the method further includes: The terminal device sends second indication information to the first access network device, where the second indication information indicates remaining connection time between the terminal device and the first cell or the second moment, and the remaining connection time is determined based on the uplink resource corresponding to the second cell.

The terminal device indicates, to the first access network device by using the second indication information, the remaining connection time between the terminal device and the first cell or the second moment, to notify the first access network device when the terminal device is disconnected from the first cell, to avoid a case in which the first access network device resumes a connection between the terminal device and the first cell after the terminal device is disconnected from the first cell, thereby reducing overheads and power consumption of the first access network device.

According to a second aspect, a handover method is provided. The method may be performed by a first access network device or a chip or a chip system in the first access network device. The method includes: The first access network device sends a handover command to a terminal device, where the handover command instructs the terminal device to be handed over from a first cell to a second cell, the terminal device keeps connected to the first cell within a time range from a first moment to a second moment, the first moment is a moment at which the terminal device receives the handover command, the second moment is later than the first moment, the first access network device is a current serving access network device of the terminal device, the first cell is a cell served by the first access network device, and the second cell is a cell served by a second access network device.

The method provided in the second aspect is a method that is on a first access network device side and that corresponds to the first aspect. For beneficial effects thereof, directly refer to the first aspect.

In a possible implementation, the terminal device receives second information from the first access network device, where the second information includes an uplink resource corresponding to each of at least one candidate cell, and the at least one candidate cell includes the second cell.

In a possible implementation, the method further includes: The first access network device receives second indication information from the terminal device, where the second indication information indicates remaining connection time between the terminal device and the first cell or the second moment, and the remaining connection time is determined by the terminal device based on an uplink resource corresponding to the second cell.

In a possible implementation, the second moment includes one or more of the following:
a moment at which the terminal device obtains an uplink resource corresponding to the second cell;
a start moment of a time domain resource included in the uplink resource that corresponds to the second cell and that is obtained by the terminal device;
a moment at which the terminal device receives first indication information from the first access network device, where the first indication information indicates the terminal device to release a connection to the first cell; or
a moment whose time interval with the first moment is greater than or equal to a preset time period.

According to a third aspect, a handover method is provided. The method may be performed by a terminal device or a chip or a chip system in the terminal device. The method includes: The terminal device receives a handover command from a first access network device, where the handover command instructs the terminal device to be handed over from a first cell to a second cell, and indicates a second moment at which the terminal device releases a connection to the first cell, the second moment is later than a first moment at which the terminal device receives the handover command, the first access network device is a current serving access network device of the terminal device, and the first cell is a cell served by the first access network device.

According to the foregoing technical solution, the handover command sent by the first access network device to the terminal device instructs the terminal device to be handed over from the first cell to the second cell, and indicates the second moment at which the terminal device releases the connection to the first cell, where the second moment is determined by the first access network device based on an uplink resource corresponding to the second cell, and the terminal device keeps connected to the first cell based on the handover command within a time period from the first moment to the second moment, to avoid a case in which the terminal device immediately is disconnected from the first cell after receiving the handover command, thereby reducing communication interruption time.

In a possible implementation, the second moment is determined by the first access network device based on the uplink resource corresponding to the second cell.

The uplink resource corresponding to the second cell is periodic, for example, the second moment is a start moment of an uplink resource that corresponds to the second cell and that is closest to the moment at which the first access network device sends the handover command, or the second moment is a start moment of an uplink resource that corresponds to the second cell and that is closest to the first moment at which the terminal device receives the handover command.

In a possible implementation, the method further includes: The terminal device receives, from the first access network device, the uplink resource corresponding to the second cell.

In a possible implementation, the method further includes: The terminal device sends first information to a second access network device at a third moment, where the first information indicates that the terminal device is already handed over to the second cell, the third moment is later than the first moment, and the second cell is a cell served by the second access network device. According to the foregoing solution, the second access network device may determine, based on the first information, that the terminal device is already handed over to the second cell served by the second access network device, to avoid a case in which the second access network device does not know when the terminal device is handed over to the second cell served by the second access network device.

In a possible implementation, that the terminal device sends the first information to the second access network device at the third moment includes: The terminal device sends the first information to the second access network device at the third moment by using an uplink resource corresponding to the second cell and an uplink timing advance corresponding to the second cell.

Optionally, before the terminal device sends the first information to the second access network device, the terminal device obtains the uplink timing advance corresponding to the second cell. For example, the terminal device may obtain the uplink timing advance corresponding to the second cell in any one of the following manners: The first access network device sends, to the terminal device by using the handover command, the uplink timing advance corresponding to the second cell; and before receiving the handover command, the terminal device obtains, by using a random access process, the uplink timing advance corresponding to the second cell; or the terminal device obtains, by measuring a downlink reference signal, the uplink timing advance corresponding to the second cell.

In a possible implementation, the third moment includes any one of the following: a moment at which the terminal device obtains the uplink resource corresponding to the second cell; or a moment at which the terminal device completes radio frequency switching after obtaining the uplink resource corresponding to the second cell.

When the first cell and the second cell are intra-frequency cells, the third moment includes the moment at which the terminal device obtains the uplink resource corresponding to the second cell, and the terminal device may send the first information to the second access network device without performing radio frequency switching. When the first cell and the second cell are inter-frequency cells, the third moment includes the moment at which the terminal device completes radio frequency switching after obtaining the uplink resource corresponding to the second cell, and the terminal device can send the first information to the second access network device only after completing the radio frequency switching.

According to a fourth aspect, a handover method is provided. The method may be performed by a first access network device or a chip or a chip system in the first access network device. The method includes: The first access network device sends a handover command to a terminal device, where the handover command instructs the terminal device to be handed over from a first cell to a second cell, and indicates a second moment at which the terminal device releases a connection to the first cell, the second moment is later than a moment at which the first access network device sends the handover command, the first access network device is a current serving access network device of the terminal device, and the first cell is a cell served by the first access network device.

The method provided in the fourth aspect is a method that is on a first access network device side and that corresponds to the third aspect. For beneficial effects thereof, directly refer to the third aspect.

In a possible implementation, the second moment is determined by the first access network device based on an uplink resource corresponding to the second cell.

In a possible implementation, the method further includes: The first access network device sends, to the terminal device, the uplink resource corresponding to the second cell, where the second cell is a cell served by the second access network device.

In a possible implementation, the method further includes: The first access network device receives, from the second access network device, the uplink resource corresponding to the second cell.

According to a fifth aspect, a handover method is provided. The method includes: A first access network device sends a handover command to a terminal device, where the handover command instructs the terminal device to be handed over from a first cell to a second cell, the first access network device is a current serving access network device of the terminal device, the first cell is a cell served by the first access network device, and the second cell is a cell served by a second access network device; and the terminal device receives the handover command from the first access network device, where the terminal device keeps connected to the first cell within a time range from a first moment to a second moment, the first moment is a moment at which the terminal device receives the handover command, and the second moment is later than the first moment.

In a possible implementation, the terminal device sends first information to the second access network device at a third moment, where the first information indicates that the terminal device is already handed over to the second cell, and the third moment is later than the first moment; and the second access network device receives the first information from the terminal device.

In a possible implementation, the first access network device sends second information to the terminal device, where the second information includes an uplink resource corresponding to each of at least one candidate cell, and the at least one candidate cell includes the second cell; and the terminal device receives the second information from the first access network device.

In a possible implementation, that the terminal device sends the first information to the second access network device at the third moment includes: The terminal device sends the first information to the second access network device at the third moment by using an uplink resource corresponding to the second cell and an uplink timing advance corresponding to the second cell.

In a possible implementation, the second moment includes one or more of the following:
a moment at which the terminal device obtains an uplink resource corresponding to the second cell;
a start moment of a time domain resource included in the uplink resource that corresponds to the second cell and that is obtained by the terminal device;
a moment at which the terminal device receives first indication information from the first access network device, where the first indication information indicates the terminal device to release a connection to the first cell; or
a moment whose time interval with the first moment is greater than or equal to a preset time period.

In a possible implementation, the third moment includes any one of the following: a moment at which the terminal device obtains the uplink resource corresponding to the second cell; or a moment at which the terminal device completes radio frequency switching after obtaining the uplink resource corresponding to the second cell.

In a possible implementation, the method further includes: The terminal device sends second indication information to the first access network device, where the second indication information indicates remaining connection time between the terminal device and the first cell or the second moment, and the remaining connection time is determined by the terminal device based on the uplink resource corresponding to the second cell; and the first access network device receives the second indication information from the terminal device.

According to a sixth aspect, a handover method is provided. The method includes: A first access network device sends a handover command to a terminal device, where the handover command instructs the terminal device to be handed over from a first cell to a second cell, and indicates a second moment at which the terminal device releases a connection to the first cell, the second moment is later than a moment at which the first access network device sends the handover command, the first access network device is a current serving access network device of the terminal device, and the first cell is a cell served by the first access network device; and the terminal device receives the handover command from the first access network device.

In a possible implementation, the second moment is determined by the first access network device based on an uplink resource corresponding to the second cell.

In a possible implementation, the first access network device sends, to the terminal device, the uplink resource corresponding to the second cell; and the terminal device receives, from the first access network device, the uplink resource corresponding to the second cell.

In a possible implementation, the terminal device sends first information to a second access network device at a third moment, where the first information indicates that the terminal device is already handed over to the second cell, the third moment is later than the first moment, and the second cell is a cell served by the second access network device; and the second access network device receives the first information from the terminal device.

In a possible implementation, that the terminal device sends the first information to the second access network device at the third moment includes: The terminal device sends the first information to the second access network device at the third moment by using an uplink resource corresponding to the second cell and an uplink timing advance corresponding to the second cell.

In a possible implementation, the third moment includes any one of the following: a moment at which the terminal device obtains the uplink resource corresponding to the second cell; or a moment at which the terminal device completes radio frequency switching after obtaining the uplink resource corresponding to the second cell.

In a possible implementation, the method further includes: The second access network device sends, to the first access network device, the uplink resource corresponding to the second cell; and the first access network device receives, from the second access network device, the uplink resource corresponding to the second cell.

According to a seventh aspect, a communication apparatus is provided. The communication apparatus may be the foregoing terminal device or the first access network device, or may be a chip disposed in the terminal device or the first access network device. The communication apparatus may implement the method in the first aspect, the second aspect, the third aspect, or the fourth aspect.

The communication apparatus includes a corresponding module, unit, or means (means) for implementing the foregoing method. The module, unit, or means may be implemented by using hardware or software, or implemented by using hardware by executing corresponding software. The hardware or the software includes one or more modules or units corresponding to the foregoing functions.

According to an eighth aspect, a communication apparatus is provided. The apparatus may be used in the terminal device according to the first aspect, and the apparatus includes: a receiving unit, configured to receive a handover command from a first access network device, where the handover command instructs the communication apparatus to be handed over from a first cell to a second cell, the communication apparatus keeps connected to the first cell within a time range from a first moment to a second moment, the first moment is a moment at which the communication apparatus receives the handover command, the second moment is later than the first moment, the first access network device is a current serving access network device of the communication apparatus, and the first cell is a cell served by the first access network device.

In a possible implementation, the apparatus further includes: a sending unit, configured to send first information to a second access network device at a third moment, where the first information indicates that the communication apparatus is already handed over to the second cell, the second cell is a cell served by the second access network device, and the third moment is later than the first moment.

According to a ninth aspect, a communication apparatus is provided. The apparatus may be used in the first access network device according to the second aspect, and the apparatus includes: a sending unit, configured to send a handover command to a terminal device, where the handover command instructs the terminal device to be handed over from a first cell to a second cell, the terminal device keeps connected to the first cell within a time range from a first moment to a second moment, the first moment is a moment at which the terminal device receives the handover command, the second moment is later than the first moment, the communication apparatus is a current serving access network device of the terminal device, the first cell is a cell served by the communication apparatus, and the second cell is a cell served by a second access network device.

According to a tenth aspect, a communication apparatus is provided. The apparatus may be used in the terminal device according to the third aspect, and the apparatus includes: a receiving unit, configured to receive a handover command from a first access network device, where the handover command instructs the communication apparatus to be handed over from a first cell to a second cell, and indicates a second moment at which the communication apparatus releases a connection to the first cell, the second moment is later than a first moment at which the communication apparatus receives the handover command, the first access network device is a current serving access network device of the terminal device, and the first cell is a cell served by the first access network device.

In a possible implementation, the second moment is determined by the first access network device based on an uplink resource corresponding to the second cell.

In a possible implementation, the receiving unit is further configured to receive, from the first access network device, the uplink resource corresponding to the second cell.

In a possible implementation, the apparatus further includes: a sending unit, configured to send first information to a second access network device at a third moment, where the first information indicates that the communication apparatus is already handed over to the second cell, the third moment is later than the first moment, and the second cell is a cell served by the second access network device.

According to an eleventh aspect, a communication apparatus is provided. The apparatus may be used in the first access network device according to the fourth aspect, and the apparatus includes: a sending unit, configured to send a handover command to a terminal device, where the handover command instructs the terminal device to be handed over from a first cell to a second cell, and indicates a second moment at which the terminal device releases a connection to the first cell, the second moment is later than a moment at which the communication apparatus sends the handover command, the first access network device is a current serving access network device of the terminal device, and the first cell is a cell served by the communication apparatus.

In a possible implementation, the sending unit is further configured to send, to the terminal device, an uplink resource corresponding to the second cell, where the second cell is a cell served by a second access network device.

According to a twelfth aspect, a communication apparatus is provided, including a processor. The processor may be configured to perform the method in the first aspect, the second aspect, the third aspect, or the fourth aspect.

Optionally, the apparatus further includes a memory. The processor is coupled to the memory, and may be configured to execute instructions in the memory, so that the apparatus performs the method in the first aspect, the second aspect, the third aspect, or the fourth aspect.

Optionally, the apparatus further includes an interface circuit, and the processor is coupled to the interface circuit.

The interface circuit may be a code/data read/write interface circuit, and the interface circuit is configured to receive computer-executable instructions (where the computer-executable instructions are stored in the memory, and may be directly read from the memory, or may be read through another component), and transmit the computer-executable instructions to the processor, so that the processor runs the computer-executable instructions to perform the method in the first aspect, the second aspect, the third aspect, or the fourth aspect.

In some possible designs, the communication apparatus may be a chip or a chip system.

According to a thirteenth aspect, a communication apparatus is provided, including a processor and a memory. The processor is configured to read instructions stored in the memory, receive a signal through a receiver, and transmit a signal through a transmitter, to perform the method according to any one of the first aspect to the fourth aspect.

Optionally, there are one or more processors, and there are one or more memories.

Optionally, the memory may be integrated with the processor, or the memory and the processor are disposed separately.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

The communication apparatus may be a chip, and the processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated in the processor, or may be located outside the processor and exist independently.

According to a fourteenth aspect, a processor is provided, including an input circuit, an output circuit, and a processing circuit. The processing circuit is configured to receive a signal through the input circuit and transmit a signal through the output circuit, so that the processor performs the method in any one of the first aspect to the fourth aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a fifteenth aspect, a communication apparatus is provided, including a logic circuit and an input/output interface. The input/output interface is configured to communicate with a module other than the communication apparatus. The logic circuit is configured to run a computer program or instructions to perform the method in any one of the first aspect to the fourth aspect. The communication apparatus may be the terminal device or the first access network device in the first aspect to the fourth aspect, or an apparatus including the terminal device or the first access network device, or an apparatus, such as a chip, included in the terminal device or the first access network device.

Alternatively, the input/output interface may be a code/data read/write interface circuit. The input/output interface is configured to receive a computer program or instructions (where the computer program or the instructions are stored in a memory, and may be directly read from the memory, or may be read through another component) and transmit the computer program or instructions to the input/output interface, so that the input/output interface runs the computer program or the instructions to perform the method in any one of the first aspect to the fourth aspect.

Optionally, the communication apparatus may be a chip.

According to a sixteenth aspect, a computer program product is provided. The computer program product includes a computer program (which may also be referred to as code or instructions). When the computer program is run, a computer is enabled to perform the method in any one of the first aspect to the fourth aspect.

According to a seventeenth aspect, a computer-readable medium is provided. The computer-readable medium stores a computer program (which may also be referred to as code or instructions). When the computer program is run on a computer, the computer is enabled to perform the method in any one of the first aspect to the fourth aspect.

According to an eighteenth aspect, a chip system is provided. The chip system includes a processor and an interface, and is configured to support a communication apparatus in implementing the function in any one of the first aspect to the fourth aspect. In a possible design, the chip system further includes a memory. The memory is configured to store necessary information and data of the communication apparatus. The chip system may include a chip, or may include a chip and another discrete component.

According to a nineteenth aspect, a chip apparatus is provided. The chip apparatus includes an input interface and/or an output interface. The input interface may implement the receiving function in any one of the first aspect to the fourth aspect, and the output interface may implement the sending function in any one of the first aspect to the fourth aspect.

According to a twentieth aspect, a functional entity is provided. The functional entity is configured to implement the method in any one of the first aspect to the fourth aspect.

According to a twenty-first aspect, a communication system is provided. The communication system includes a terminal device and a first access network device, the terminal device is configured to implement the method according to the first aspect or the third aspect, and the first access network device is configured to implement the method according to the second aspect or the fourth aspect.

For technical effects brought by any design of the fifth aspect to the twenty-first aspect, refer to the technical effects brought by the first aspect or the third aspect. Details are not described herein again.

### BRIEF DESCRIPTION OF DRAWINGS

FIG. 1 is a diagram of an architecture of a communication system;
FIG. 2 is a schematic flowchart of interaction of a non-contention-based random access process;
FIG. 3 is a schematic flowchart of interaction of conventional cell handover;
FIG. 4 is a schematic flowchart of interaction of a handover method according to an embodiment of this application;
FIG. 5 is a diagram of an example of a handover method according to an embodiment of this application;
FIG. 6 is a diagram of another example of a handover method according to an embodiment of this application;
FIG. 7 is a diagram of another example of a handover method according to an embodiment of this application;
FIG. 8 is a diagram of another example of a handover method according to an embodiment of this application;
FIG. 9 is a schematic flowchart of interaction of another handover method according to an embodiment of this application;
FIG. 10 is a diagram of a communication system according to an embodiment of this application;
FIG. 11 is a diagram of a communication system according to an embodiment of this application; and
FIG. 12 to FIG. 17 are block diagrams of communication apparatuses according to embodiments of this application.

### DESCRIPTION OF EMBODIMENTS

The following further describes in detail this application with reference to accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, the word "example" in embodiments of this application is used to represent giving an example, an illustration, or a description. Any embodiment or design scheme described as an "example" in this application should not be explained as being more preferred or having more advantages than another embodiment or design scheme. Exactly, use of the expression "example" is intended to present a concept in a specific manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes some terms in embodiments of this application, to facilitate understanding of a person skilled in the art.
(1) An air interface protocol layer (layer) includes an RRC layer, a packet data convergence protocol (packet data convergence protocol, PDCP) layer, a radio link control (radio link control, RLC) layer, a medium access control (medium access control, MAC) layer, a physical (physical, PHY) layer, and the like.
   In the 3GPP new radio access technology (new radio access technology, NR) standard, the PHY layer belongs to a bottom layer defined in the protocol, and is also referred to as L1; the MAC layer belongs to a layer 2 defined in the protocol, and is also referred to as L2; and the RRC layer belongs to a layer 3 of a protocol layer, and is also referred to as L3.
(2) A beam is a communication resource. Different beams may be considered as different resources. Same information or different information may be sent by using different beams. Optionally, a plurality of beams having a same or similar communication feature may be considered as one beam (or one group of beams). One beam may include one or more antenna ports, configured to transmit a data channel, a control channel, a sounding signal, and the like. For example, a transmit beam may be distribution of signal strength formed in different directions in space after a signal is transmitted through an antenna, and a receive beam may be distribution of signal strength, in different directions in space, of a radio signal received from an antenna. It may be understood that one or more antenna ports forming one beam may also be considered as one antenna port set.

The beam may be a wide beam, a narrow beam, or another type of beam. Usually, the width of a beam may be defined as a beamwidth of X decibels (dB). For example, the width of a beam is defined as a one dB beamwidth, a three dB beamwidth, or the like. The beamwidth of X dB includes a horizontal beamwidth of X dB or a vertical beamwidth of X dB. Usually, the wide beam and the narrow beam are related to the three dB beamwidth. The three dB beamwidth of the wide beam is wide. Usually, the wide beam is used to provide wide coverage for broadcast signals. In comparison, the three dB beamwidth of the narrow beam is narrow, and a coverage width of the narrow beam is small, and the narrow beam is usually used for point-to-point communication.

A technology for forming the beam may be a beamforming technology or another technical means. The beamforming technology may be a digital beamforming technology, an analog beamforming technology, a hybrid digital/analog beamforming technology, or the like. This is not limited in this embodiment of this application.

(3) Quasi-co-location (quasi-co-location, QCL): A co-location relationship indicates that a plurality of resources have one or more same or similar communication features. A same or similar communication configuration may be used for the plurality of resources having the co-location relationship. For example, if two antenna ports have a co-location relationship, a large-scale channel property of transmitting one symbol by one port may be deduced from a large-scale channel property of transmitting one symbol by the other port. The large-scale property may include delay spread, an average delay, Doppler spread, a Doppler frequency shift, an average gain, a receiving parameter, a receive beam number of a terminal device, transmit/receive channel correlation, an angle of arrival, spatial correlation of a receiver antenna, a dominant angle of arrival (Angle-of-Arrival, AoA), an average angle of arrival, AoA spread, and the like. Co-location indication indicates whether at least two groups of antenna ports have a co-location relationship, that is, the co-location indication indicates whether channel state information reference signals sent by the at least two groups of antenna ports are from a same transmission point, or the co-location indication indicates whether the channel state information reference signals sent by the at least two groups of antenna ports are from a same beam group.

In other words, if there is a QCL relationship, the terminal device may inherit a receiving or sending parameter used when a specific reference signal is previously received, to receive or send a subsequent signal.

A QCL type (Type) includes: QCL-TypeA, QCL-TypeB, QCL-TypeC, QCL-TypeD, and the like. The QCL-TypeA, the QCL-TypeB, and the QCL-TypeC indicate information such as time domain and frequency domain, and assist the terminal device in data receiving, demodulation, and the like. The QCL-TypeD indicates a beam, and assists the terminal device in beamforming.

(4) Reference signal (reference signal, RS): According to the long term evolution (long term evolution, LTE)/NR protocol, at a physical layer, uplink communication includes transmission of physical uplink channels and uplink signals. The physical uplink channels include a random access channel (random access channel, RACH), a physical uplink control channel (physical uplink control channel, PUCCH), a physical uplink data channel (physical uplink shared channel, PUSCH), and the like. The uplink signals include a channel sounding reference signal (sounding reference signal, SRS), a PUCCH-demodulation reference signal (demodulation reference signal, DMRS), a PUSCH-DMRS, an uplink phase noise tracking reference signal (phase noise tracking reference signal, PTRS), an uplink positioning reference signal (uplink positioning RS), and the like. Downlink communication includes transmission of physical downlink channels and transmission of downlink signals. The physical downlink channels include a physical broadcast channel (physical broadcast channel, PBCH), a physical downlink control channel (physical downlink control channel, PDCCH), a physical downlink data channel (physical downlink shared channel, PDSCH), and the like. The downlink signals include a primary synchronization signal (primary synchronization signal, PSS)/secondary synchronization signal (secondary synchronization signal, SSS), a PDCCH-DMRS, a PDSCH-DMRS, a downlink PTRS, a channel state information reference signal (channel state information reference signal, CSI-RS), a cell reference signal (cell reference signal, CRS) (which does not exist in NR), a time/frequency tracking reference signal (time/frequency tracking reference signal, TRS) (which does not exist in LTE), an LTE/NR positioning signal (positioning RS), and the like.

(5) A transmission configuration indicator (transmission configuration indicator, TCI) is a field indicating quasi-co-location of PDSCH antenna ports. The TCI is configured through RRC signaling, and is referred to as a TCI-state (State) in the RRC signaling. One or more QCL relationships are configured at a higher layer by using TCI-states, that is, one or more QCL relationships are configured between downlink signals and PDSCH-DMRSs.

After RRC signaling configuration is performed, a network device may send a MAC control element (control element, CE) to activate one or more TCI-states. If the TCI-state includes QCL-TypeD information, in other words, the TCI indicates one or more beams, the MAC CE may be used to activate the one or more beams, and a terminal device may measure an activated beam, to be specific, measure a reference signal corresponding to the activated beam.

The network device may further instruct the terminal device to perform communication by using a beam indicated by the TCI. Optionally, the beam used for communication may be one of one or more activated beams.

(6) Random access is a process of establishing a radio link between a terminal device and a network device. After random access is completed, data exchange may be performed between the terminal device and the network device. The terminal device may implement three basic functions through random access: (1) uplink synchronization with the network device; (2) applying for an uplink grant (UL grant) resource, which is used by the terminal device to send a message (Msg) 3; and (3) obtaining a cell-radio network temporary identifier (cell-radio network temporary identifier, C-RNTI) allocated by the network device to the terminal device.

A contention-based random access process includes the following steps: The terminal device sends an Msg1 to the network device, where the Msg1 includes a random access preamble (random access preamble, RAP). The network device sends an Msg2 to the terminal device, where the Msg2 includes a temporary C-RNTI allocated to the terminal device. The terminal device sends an Msg3 to the network device, where the Msg3 includes a temporary C-RNTI. The network device sends an Msg4 to the terminal device, where the Msg4 includes a C-RNTI allocated to a terminal device that successfully performs accessing. In this case, it may be considered that the terminal device completes random access.

A non-contention-based random access process includes the following steps: The terminal device sends an Msg 1 to the network device, and the network device sends an Msg 4 to the terminal device. The non-contention-based random access process does not need the Msg2 or Msg3.

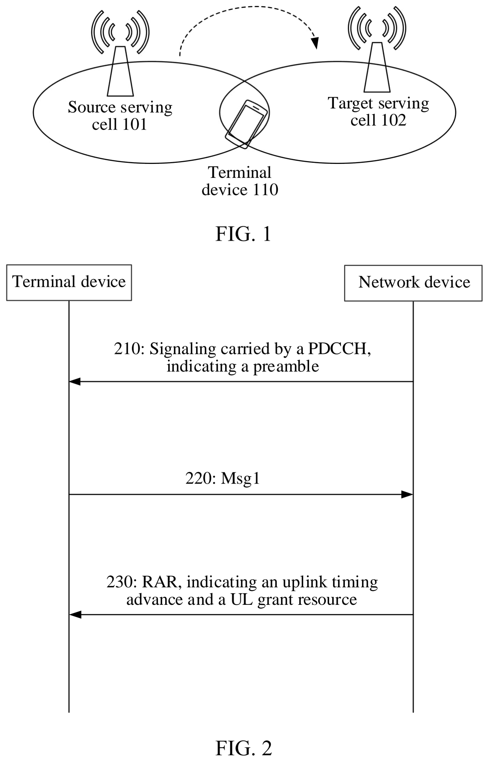

FIG. 2 is a schematic flowchart of interaction of a non-contention-based random access process. Specific steps include:
210: A network device sends signaling carried by a PDCCH to a terminal device, where the signaling indicates a preamble (preamble) that can be used during resource selection in a random access process. Optionally, the signaling may further indicate a synchronization signal block (synchronization signal block, SSB) index, where an SSB may also be referred to as a synchronization signal/physical broadcast channel block (synchronization signal/physical broadcast channel block, SS/PBCH block), and the SSB index is used by the terminal device to determine a physical random access channel (physical random access channel, PRACH).
220: The terminal device sends a RAP to the network device, where the RAP is carried in an Msg1, and a main function of the RAP is to notify the network device that there is a random access request, so that the network device determines an uplink timing advance (timing advance, TA) of the terminal device based on the RAP from the terminal device, and allocates a UL grant resource to the terminal device.
230: The terminal device receives a random access response (random access response, RAR) from the network device, where the RAR is carried in an Msg4, and the RAR indicates the uplink timing advance, the UL grant resource allocated by the network device to the terminal device, and the like. Specifically, after the terminal device sends the preamble, the terminal device may monitor the PDCCH in a RAR response window based on a random access radio network temporary identifier (random access radio network temporary identifier, RA-RNTI) corresponding to the preamble. If receiving downlink control information (downlink control information, DCI) of the terminal device, the terminal device receives the RAR from the network device on a physical downlink shared channel (physical downlink shared channel, PDSCH) based on the DCI information.

The technical solutions in embodiments of this application may be applied to various communication systems. The communication systems usually include but are not limited to a 4th generation (4th generation, 4G) communication system (for example, an LTE system), a 5th generation (5th generation, 5G) communication system (for example, an NR system), a future mobile communication system, and the like. This application may also be applied to another communication system, for example, a satellite communication system. The satellite communication system may be integrated with the foregoing communication system.

The communication system provided in embodiments of this application is applicable to communication between a network device and a terminal device. The communication system may include one or more network devices and one or more terminal devices. The network device may transmit data and control signaling to the terminal device. FIG. 1 is a diagram of an architecture of a communication system. The communication system may include a plurality of network devices (for example, a source serving cell 101 and a target serving cell 102) and one terminal device (for example, a terminal device 110). The source serving cell 101 may send signaling to the terminal device 110, to hand over the terminal device 110 to the target serving cell 102. The communication system in embodiments of this application may also be applicable to communication between network devices, communication between terminal devices, and communication of the internet of vehicles, the internet of things, the industrial internet, and the like.

Optionally, the network device in embodiments of this application is a device that connects the terminal device to a wireless network. The network device may be a node in a radio access network, and may also be referred to as a base station, or may be referred to as a radio access network (radio access network, RAN) node (or device). For example, the network device may include an evolved NodeB (NodeB or eNB or eNodeB, evolved NodeB) in an LTE system or an LTE-advanced (LTE-Advanced, LTE-A) system, for example, a conventional macro base station eNB and a micro base station eNB in a heterogeneous network scenario, may include a next generation NodeB (next generation NodeB, gNB) in a 5G NR system, may include a transmission reception point (transmission reception point, TRP), a home base station (for example, a home evolved NodeB, or a home NodeB, HNB), a baseband unit (baseband unit, BBU), a baseband pool (BBU pool), a wireless fidelity (wireless fidelity, Wi-Fi) access point (access point, AP), or the like, may include a central unit (central unit, CU) and a distributed unit (distributed unit, DU) in a cloud radio access network (cloud radio access network, CloudRAN), or may include a network device in a non-terrestrial network (non-terrestrial network, NTN), that is, may be deployed on a high altitude platform or a satellite, where in the NTN, the network device may be used as a layer 1 (L1) relay (relay), may be used as a base station, may be used as a DU, or may be used as an integrated access and backhaul (integrated access and backhaul, IAB) node, which is not limited in embodiments of this application. Certainly, the network device may alternatively be a node in a core network.

Optionally, the terminal device in embodiments of this application may be a device configured to implement a wireless communication function, for example, a terminal or a chip that may be used in the terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self-driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), or the like. Alternatively, the terminal may be a terminal (for example, an internet of vehicles device) in vehicle-to-everything (vehicle-to-everything, V2X), a terminal in device-to-device (Device-to-Device) communication, a terminal in machine-to-machine (machine-to-machine, M2M) communication, or the like. The terminal may be movable or fixed.

To facilitate understanding of embodiments of this application, the following briefly describes handover technologies related to embodiments of this application.

In a conventional handover technology, after a terminal device receives a handover command sent by a source access network device through RRC signaling/L3 signaling, the terminal device sends a random access request message to a target access network device, and the target access network device calculates, based on the received random access request message, an uplink timing advance needed by the terminal device. Because the terminal device sends the random access request message to the target access network device, the target access network device may consider the random access request message as an arrival indication of the terminal device. After receiving the random access request message, the target access network device considers that the terminal device is handed over to a target serving cell served by the target access network device, and may start to schedule the terminal device.

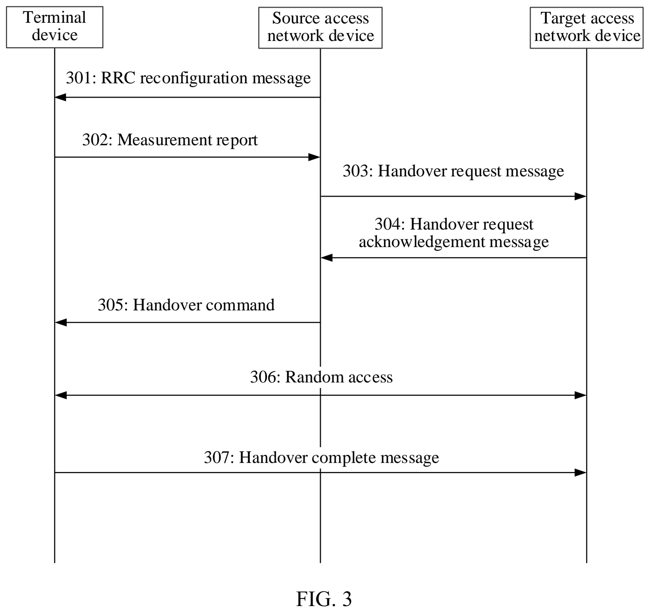

FIG. 3 is a schematic flowchart of interaction of conventional cell handover. In a conventional cell handover process, a terminal device performs cell handover based on L3 signaling. Specific steps are as follows.

301: A source access network device sends an RRC reconfiguration message to a terminal device in a connected state, where the RRC reconfiguration message is used by the terminal device to measure signal strength of a current serving cell and another cell, and the RRC reconfiguration message includes parameters such as a measurement object, report configuration, and a measurement identifier.

302: The terminal device receives the RRC reconfiguration message from the source access network device, and after performing cell measurement based on the RRC reconfiguration message, the terminal device generates a measurement report and reports the measurement report to the currently connected source access network device, where the measurement report includes the signal strength of the current serving cell and the signal strength of the another cell that are obtained by the terminal device through measurement.

303: The source access network device determines, based on the measurement report reported by the terminal device, whether cell handover needs to be performed on the terminal device; and if determining that cell handover needs to be performed on the terminal device, the source access network device sends a handover request message to a target access network device.

304: The target access network device receives the handover request message from the source access network device, and determines, based on a case such as a quantity of terminal devices connected to the target access network device, whether to allow access of the terminal device; and if access of the terminal device is allowed, the target access network device sends a handover request acknowledgment message to the source access network device, where the handover request acknowledgment message includes parameters such as a cell radio network temporary identifier (cell radio network temporary identifier, C-RNTI) allocated to the terminal device and a security-related algorithm of the target access network device.

305: The source access network device receives the handover request acknowledgment message from the target access network device, and sends a handover command to the terminal device, where the handover command includes a parameter in the handover request acknowledgment message, that is, the source access network device performs transparent transmission. Specifically, the handover command includes related information of a target serving cell and a related configuration parameter needed for accessing the target serving cell by the terminal device. For example, the handover command includes a PCI of the target serving cell, frequency information of the target serving cell (a frequency of the target serving cell), a C-RNTI allocated by the target serving cell to the terminal device, a random access channel (random access channel, RACH) resource needed for accessing the target serving cell, and other information.

306: The terminal device receives the handover command from the source access network device, and initiates random access to the target access network device based on the handover command. Specifically, the terminal device sends a random access request message/Msg1 to the target access network device. The target access network device sends the RAR to the terminal device after receiving the random access request message/Msg1 from the terminal device.

307: The terminal device sends a handover complete message to the target access network device if the terminal device successfully accesses the target access network device.

Currently, a 3GPP standard conference discusses that a terminal device performs cell switch based on L1/L2 signaling. In a process of performing cell switch based on the L1/L2 signaling, the terminal device is allowed to send a random access request to a target access network device before receiving a switch command, to obtain an uplink timing advance. After receiving the switch command, the terminal device is disconnected from a source serving cell, and can communicate with a target serving cell only when a start moment of a periodic uplink grant resource of the target serving cell is reached. Consequently, the terminal device cannot communicate with the source serving cell and the target serving cell within a period of time after receiving the switch command, and communication is interrupted, especially when the uplink grant resource of the target serving cell has a large periodicity and a delivery moment of the switch command is exactly an end moment of a previous resource periodicity. In addition, in a process of performing cell switch based on the L1/L2 signaling, the terminal device no longer sends the random access request to the target access network device after receiving the switch command. Consequently, the target access network device does not know when the terminal device is switched to the target serving cell served by the target access network device.

Based on this, an embodiment of this application provides a handover method, which may be applied to the communication system shown in FIG. 1. In the method, a terminal device keeps connected to a first cell within a time range from a first moment to a second moment, the first moment is a moment at which the terminal device receives a handover command from a first access network device, the handover command instructs the terminal device to be handed over from the first cell to a second cell, the second moment is later than the first moment, and the first cell is a cell served by the first access network device. Therefore, it can be avoided that the terminal device immediately is disconnected from the first cell after receiving the handover command, thereby reducing communication interruption time of the terminal device. In addition, the terminal device may further send first information to a second access network device at a third moment, where the first information indicates that the terminal device is already handed over to the second cell, and the third moment is later than the first moment. The second access network device may determine, based on the first information sent by the terminal device, that the terminal device is already handed over to the second cell served by the second access network device, to avoid a case in which the second access network device does not know when the terminal device is handed over to the second cell served by the second access network device.

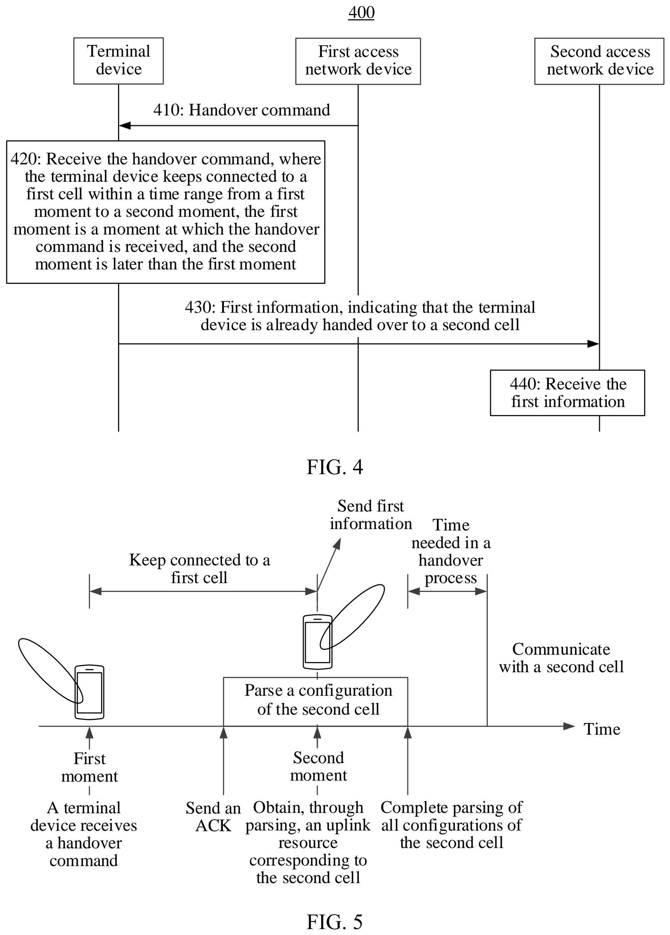

FIG. 4 is a schematic flowchart of interaction of a handover method 400 according to an embodiment of this application. In this embodiment of this application, a first access network device may be referred to as a source access network device or a source base station, and a second access network device may be referred to as a target access network device or a target base station.

410: The first access network device sends a handover command to a terminal device, where the handover command instructs the terminal device to be handed over from a first cell to a second cell, the first access network device is a current serving access network device of the terminal device, the first cell is a cell served by the first access network device, the first cell may also be referred to as a source serving cell, the second cell is a cell served by the second access network device, and the second cell may be referred to as a target serving cell.

Optionally, before the first access network device sends the handover command to the terminal device, the terminal device sends a random access request to the second access network device. Correspondingly, the second access network device receives the random access request sent by the terminal device. In a possible implementation, after receiving the random access request sent by the terminal device, the second access network device sends a random access response to the terminal device, where the random access response includes an uplink timing advance corresponding to the second cell. In another possible implementation, after receiving the random access request sent by the terminal device, the second access network device does not send a random access response to the terminal device, and the second access network device sends, to the first access network device, an uplink timing advance corresponding to the second cell; and after receiving the uplink timing advance that corresponds to the second cell and that is sent by the second access network device, the first access network device sends, to the terminal device by using the handover command, the uplink timing advance corresponding to the second cell.

Optionally, the first access network device and the second access network device may be a same access network device, or may be different access devices; and the first access network device and the second access network device may be different DUs in a same access network device. The first cell and the second cell may be different cells served by a same access network device, or may be different cells served by different access network devices. In this embodiment of this application, an action on a first access network device side may be completed by a DU in the first access network device.

For example, the handover command may be sent by the DU in the first access network device to the terminal device. For example, the handover command may be sent by the first access network device to the terminal device through MAC layer signaling.

420: The terminal device receives the handover command from the first access network device, where the terminal device keeps connected to the first cell within a time range from a first moment to a second moment, the first moment is a moment at which the terminal device receives the handover command from the first access network device, and the second moment is later than the first moment. Specifically, the terminal device keeps connected to the first cell based on the received handover command within the time range from the first moment to the second moment, to avoid a case in which the terminal device immediately is disconnected from the first cell after receiving the handover command, thereby reducing communication interruption time.

The "second moment" may be understood as a moment at which the terminal device releases the connection to the first cell. "The terminal device keeps connected to the first cell" may be understood as that a serving cell of the terminal device is still the first cell, or the terminal device still camps on the first cell.

Optionally, the terminal device sends an acknowledgement (acknowledgement, ACK) message to the first access network device after receiving the handover command from the first access network device, where the ACK message indicates that the terminal device receives the handover command. Correspondingly, the first access network device receives the ACK message from the terminal device.

Optionally, before the first access network device sends the handover command to the terminal device, the first access network device sends second information to the terminal device, where the second information includes an uplink resource corresponding to each of at least one candidate cell, and the at least one candidate cell includes the second cell. Correspondingly, the terminal device receives the second information from the first access network device, and the terminal device obtains, based on the second information, the uplink resource corresponding to the second cell. The uplink resource in this embodiment of this application may be understood as an uplink grant resource. The uplink resource includes a configured grant-PUSCH (configured grant-PUSCH, CG-PUSCH) resource, an SRS resource, or the like.

A process in which the terminal device obtains the uplink resource corresponding to the second cell includes two cases. In the first case, after receiving the second information from the first access network device, the terminal device starts to parse the second information, to obtain a part of the uplink resource corresponding to the second cell; and after receiving the handover command from the first access network device, the terminal device continues to parse the second information, to obtain the other part of the uplink resource corresponding to the second cell. In the second case, after receiving the second information from the first access network device, the terminal device does not parse the second information; and after receiving the handover command from the first access network device, the terminal device starts to parse the second information, to obtain the uplink resource corresponding to the second cell. For example, the second information is sent by the first access network device to the terminal device by using a cell group configuration (cell group config). In this case, before receiving the handover command from the first access network device, the terminal device does not parse a preconfigured uplink resource, and the terminal device starts to parse the second information only after receiving the handover command from the first access network device, to obtain the uplink resource corresponding to the second cell.

For example, before the first access network device sends the second information to the terminal device, the first access network device actively obtains, based on measurement report information reported by the terminal device, the uplink resource corresponding to each of the at least one candidate cell.

Optionally, the second moment includes one or more of the following:
a moment at which the terminal device obtains an uplink resource corresponding to the second cell;
a start moment of a time domain resource included in the uplink resource that corresponds to the second cell and that is obtained by the terminal device;
a moment at which the terminal device receives the first indication information from the first access network device, where the first indication information indicates the terminal device to release a connection to the first cell; or
a moment whose time interval with the first moment is greater than or equal to a preset time period.

The preset time period may be predefined, or may be determined by a handover capability of the terminal device. For example, the handover capability of the terminal device is stronger, time needed in a handover process of the terminal device is shorter, and the second moment may be shorter from the start moment of the time domain resource included in the uplink resource corresponding to the second cell. Therefore, the preset time period may be longer. For another example, the handover capability of the terminal device is weaker, time needed in a handover process of the terminal device is longer, and the second moment is longer from the start moment of the time domain resource included in the uplink resource corresponding to the second cell. Therefore, the preset time period may be shorter. The time needed in the handover process may be understood as time needed from time when handover starts to time when the handover is completed.

For example, the terminal device keeps connected to the first cell within a time range from the first moment to the moment at which the terminal device obtains the uplink resource corresponding to the second cell. The moment at which the terminal device obtains the uplink resource corresponding to the second cell may be understood as a moment at which the terminal device completes parsing of the uplink resource corresponding to the second cell after receiving the second information.

For example, after obtaining the uplink resource corresponding to the second cell, the terminal device keeps connected to the first cell in a time range from the first moment to the start moment of the time domain resource included in the uplink resource corresponding to the second cell. The start moment of the time domain resource included in the uplink resource corresponding to the second cell may be understood as a start moment of a time domain resource included in an uplink resource that corresponds to the second cell and that is after the first moment and is closest to the first moment.

For example, the first access network device sends first indication information to the terminal device, where the first indication information indicates the terminal device to release a connection to the first cell. Correspondingly, the terminal device receives the first indication information from the first access network device, and the terminal device keeps connected to the first cell within a time range from the first moment to a moment at which the first indication information is received from the first access network device.

For example, the terminal device keeps connected to the first cell within a time range from the first moment to the moment whose time interval with the first moment is greater than or equal to the preset time period.

Optionally, the second moment may further include one or more of the following:
later than a moment at which the terminal device obtains the uplink resource corresponding to the second cell;
later than a start moment of the time domain resource included in the uplink resource that corresponds to the second cell and that is obtained by the terminal device;
later than a moment at which the terminal device receives the first indication information from the first access network device, where the first indication information indicates the terminal device to release a connection to the first cell;
a moment whose time interval with the moment at which the terminal device obtains the uplink resource corresponding to the second cell is greater than or equal to a first preset threshold, where the second moment is later than the moment at which the terminal device obtains the uplink resource corresponding to the second cell;
a moment whose time interval with the start moment of the time domain resource included in the uplink resource that corresponds to the second cell and that is obtained by the terminal device is greater than or equal to the first preset threshold, where the second moment is later than the start moment of the time domain resource included in the uplink resource that corresponds to the second cell and that is obtained by the terminal device; or
a moment whose time interval with the moment at which the terminal device receives the first indication information from the first access network device is greater than or equal to the first preset threshold, where the second moment is later than the moment at which the terminal device receives the first indication information from the first access network device, the first indication information indicates the terminal device to release a connection to the first cell, and the first preset threshold may be predefined, or may be indicated by the first access network device to the terminal device.

Optionally, the terminal device sends second indication information to the first access network device, where the second indication information indicates remaining connection time between the terminal device and the first cell or the second moment, and the remaining connection time is determined by the terminal device based on the uplink resource corresponding to the second cell. For example, the remaining connection time is determined by the terminal device based on the time domain resource included in the uplink resource corresponding to the second cell.

For example, when the second moment is the moment at which the terminal device obtains the uplink resource corresponding to the second cell, the second moment is the start moment of the time domain resource included in the uplink resource corresponding to the second cell, or the second moment is the moment whose time interval with the first moment is greater than or equal to the preset time period, the terminal device sends the second indication information to the first access network device.

The terminal device indicates, to the first access network device by using the second indication information, the remaining connection time between the terminal device and the first cell or the second moment, to notify the first access network device when the terminal device is disconnected from the first cell, to avoid a case in which the first access network device resumes a connection between the terminal device and the first cell after the terminal device is disconnected from the first cell, thereby reducing overheads and power consumption of the first access network device.

430: The terminal device sends first information to the second access network device at a third moment, where the first information indicates that the terminal device is already handed over to the second cell, and the third moment is later than the first moment. For example, the first information may be sent by the terminal device to the terminal device through RRC layer signaling.

In this embodiment of this application, that the terminal device is already handed over to the second cell may be understood as at least one of the following: The terminal device is to be handed over to the second cell; the terminal device starts to be handed over to the second cell; the terminal device already completes RRC reconfiguration; or the terminal device completes radio frequency switching after obtaining the uplink resource corresponding to the second cell. "Radio frequency switching" may be understood as "carrier switching", that a radio frequency component of the terminal device adjusts a working frequency, or a similar concept defined in another protocol.

440: The second access network device receives the first information from the terminal device, and the second access network device may determine, based on the first information, that the terminal device is already handed over to the second cell served by the second access network device, to avoid a case in which the second access network device does not know when the terminal device is handed over to the second cell served by the second access network device.

For example, the first information may indicate that the terminal device obtains the uplink resource corresponding to the second cell. The second access network device may learn, based on the first information, that the terminal device obtains the uplink resource corresponding to the second cell, to determine that the terminal device is already handed over to the second cell.

Optionally, the terminal device sends the first information to the second access network device at the third moment by using the uplink resource corresponding to the second cell and the uplink timing advance corresponding to the second cell. Correspondingly, the second access network device receives the first information from the terminal device based on the uplink resource corresponding to the second cell and the uplink timing advance corresponding to the second cell.

Optionally, before the terminal device sends the first information to the second access network device, the terminal device obtains the uplink timing advance corresponding to the second cell. For example, the terminal device may obtain the uplink timing advance corresponding to the second cell in any one of the following manners: The first access network device sends, to the terminal device by using the handover command, the uplink timing advance corresponding to the second cell; and before receiving the handover command, the terminal device obtains, by using a random access process, the uplink timing advance corresponding to the second cell; or the terminal device obtains, by measuring a downlink reference signal, the uplink timing advance corresponding to the second cell.

Optionally, the third moment includes any one of the following: a moment at which the terminal device obtains the uplink resource corresponding to the second cell; or a moment at which the terminal device completes radio frequency switching after obtaining the uplink resource corresponding to the second cell.

When the first cell and the second cell are intra-frequency cells, the third moment includes the moment at which the terminal device obtains the uplink resource corresponding to the second cell, and the terminal device may send the first information to the second access network device without performing radio frequency switching. When the first cell and the second cell are inter-frequency cells, the third moment includes the moment at which the terminal device completes radio frequency switching after obtaining the uplink resource corresponding to the second cell, and the terminal device can send the first information to the second access network device only after completing the radio frequency switching.

In a possible implementation, the first cell and the second cell are intra-frequency cells, and the second moment and the third moment are a same moment. For example, the second moment and the third moment are the moment at which the terminal device obtains the uplink resource corresponding to the second cell.

In another possible implementation, the first cell and the second cell are inter-frequency cells, and the second moment is earlier than the third moment. For example, the second moment is the moment at which the terminal device obtains the uplink resource corresponding to the second cell, and the third moment is the moment at which the terminal device completes radio frequency switching after obtaining the uplink resource corresponding to the second cell.

In another possible implementation, that the second moment is later than the third moment may be understood as that the third moment is between the first moment and the second moment. For example, the first cell and the second cell are intra-frequency cells. The second moment is the start moment that is of the time domain resource included in the uplink resource corresponding to the second cell and that is after the terminal device obtains the uplink resource corresponding to the second cell. The third moment is the moment at which the terminal device obtains the uplink resource corresponding to the second cell.

Optionally, the third moment may further include one or more of the following:
later than a moment at which the terminal device obtains the uplink resource corresponding to the second cell;
later than a moment at which the terminal device completes radio frequency switching after obtaining the uplink resource corresponding to the second cell;
a moment whose time interval with the moment at which the terminal device obtains the uplink resource corresponding to the second cell is greater than or equal to a second preset threshold, where the third moment is later than the moment at which the terminal device obtains the uplink resource corresponding to the second cell; or
a moment whose time interval with the moment at which the terminal device completes radio frequency switching after obtaining the uplink resource corresponding to the second cell is greater than or equal to the second preset threshold, where the third moment is later than the moment at which the terminal device completes the radio frequency switching after obtaining the uplink resource corresponding to the second cell, and the second preset threshold may be predefined, or may be indicated by the first access network device to the terminal device.

In the technical solution provided in this embodiment of this application, the terminal device keeps connected to the first cell within the time range from the first moment to the second moment, the first moment is a moment at which the terminal device receives the handover command, and the second moment is later than the first moment, to avoid a case in which the terminal device immediately is disconnected from the first cell after receiving the handover command, thereby reducing communication interruption time of the terminal device. In addition, the second access network device may determine, based on the first information sent by the terminal device, that the terminal device is already handed over to the second cell served by the second access network device, to avoid a case in which the second access network device does not know when the terminal device is handed over to the second cell served by the second access network device.

The following further describes the handover method provided in embodiments of this application with reference to a specific example.

FIG. 5 is a diagram of an example of a handover method according to an embodiment of this application. In this example, a first cell and a second cell are intra-frequency cells, a second moment and a third moment are a same moment, and the second moment and the third moment are a moment at which a terminal device obtains an uplink resource corresponding to the second cell.

The terminal device keeps connected to the first cell within a time period from a first moment to the moment at which the uplink resource corresponding to the second cell is obtained/obtained, through parsing, where the first moment is a moment at which the terminal device receives a handover command from a first access network device. The terminal device sends first information to the second access network device at the second moment/the third moment at which the terminal device obtains/obtains, through parsing, the uplink resource corresponding to the second cell, where the first information indicates that the terminal device is to be handed over to the second cell served by the second access network device. After obtaining, through parsing, the uplink resource corresponding to the second cell, the terminal device further needs to parse a cell common configuration and an uplink/downlink physical channel configuration of the second cell. After completing parsing of all configurations of the second cell, the terminal device performs a handover process of being handed over from the first cell to the second cell. After completing the handover process, the terminal device sends an RRC reconfiguration complete message to the second access network device, and the terminal device communicates with the second cell.

Optionally, the terminal device sends an ACK message to the first access network device after the terminal device receives the handover command from the first access network device, where the ACK message indicates that the terminal device already receives the handover command.

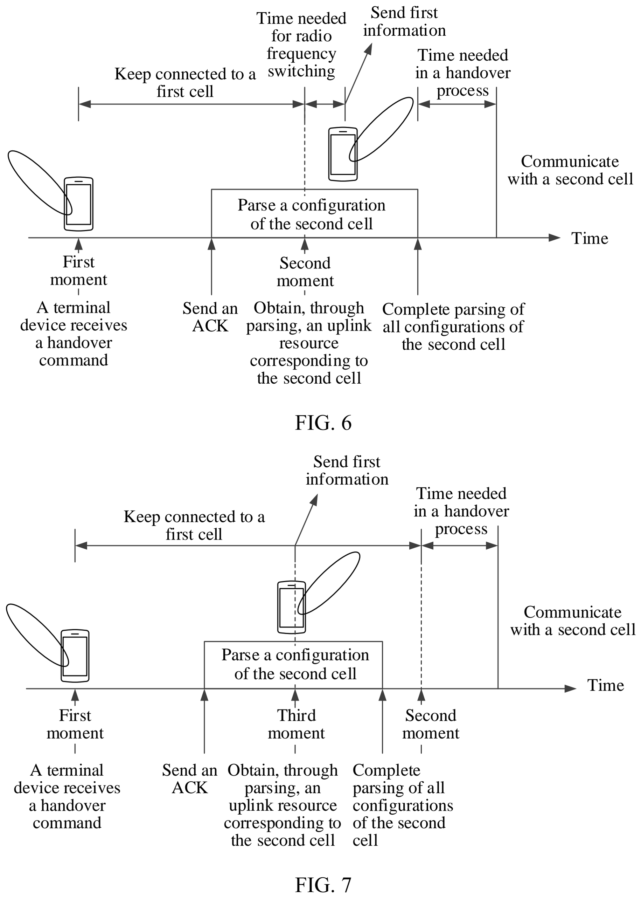

FIG. 6 is a diagram of another example of a handover method according to an embodiment of this application. In this example, a first cell and a second cell are inter-frequency cells, a second moment is earlier than a third moment, the second moment is a moment at which a terminal device obtains an uplink resource corresponding to the second cell, and the third moment is a moment at which the terminal device completes radio frequency switching after obtaining the uplink resource corresponding to the second cell.

The terminal device keeps connected to the first cell within a time period from a first moment to the moment at which the uplink resource corresponding to the second cell is obtained/obtained through parsing, where the first moment is a moment at which the terminal device receives a handover command from a first access network device. After the terminal device obtains the uplink resource corresponding to the second cell, because the first cell and the second cell are inter-frequency cells, the terminal device can send first information to a second access network device only after completing radio frequency switching. The terminal device sends the first information to the second access network device at the third moment at which the terminal device completes radio frequency switching, where the first information indicates that the terminal device is already handed over to the second cell served by the second access network device. After completing parsing of all configurations of the second cell, the terminal device performs a handover process of being handed over from the first cell to the second cell. After completing the handover process, the terminal device sends an RRC reconfiguration complete message to the second access network device, and the terminal device communicates with the second cell. Optionally, the terminal device sends an ACK message to the first access network device after the terminal device receives the handover command from the first access network device, where the ACK message indicates that the terminal device already receives the handover command.

FIG. 7 is a diagram of another example of a handover method according to an embodiment of this application. In this example, a first cell and a second cell are intra-frequency cells, a second moment is later than a third moment, the second moment is a moment whose time interval with a first moment is greater than or equal to a preset time period, and the third moment is a moment at which a terminal device obtains an uplink resource corresponding to the second cell.

The terminal device keeps connected to the first cell within a time period from the first moment to the moment (the second moment) whose time interval with the first moment is greater than or equal to the preset time period, and the first moment is a moment at which the terminal device receives a handover command from a first access network device. The terminal device sends first information to a second access network device at the third moment at which the terminal device obtains/obtains, through parsing, the uplink resource corresponding to the second cell, where the first information indicates that the terminal device is to be handed over to the second cell served by the second access network device. The terminal device performs, starting from the second moment, a handover process of being handed over from the first cell to the second cell. The terminal device communicates with the second cell after completing the handover process. Optionally, the terminal device sends an ACK message to the first access network device after the terminal device receives the handover command from the first access network device, where the ACK message indicates that the terminal device already receives the handover command.

Optionally, the moment (the second moment) whose time interval with the first moment is greater than or equal to the preset time period may be earlier than the third moment, or may be a same moment as the third moment.

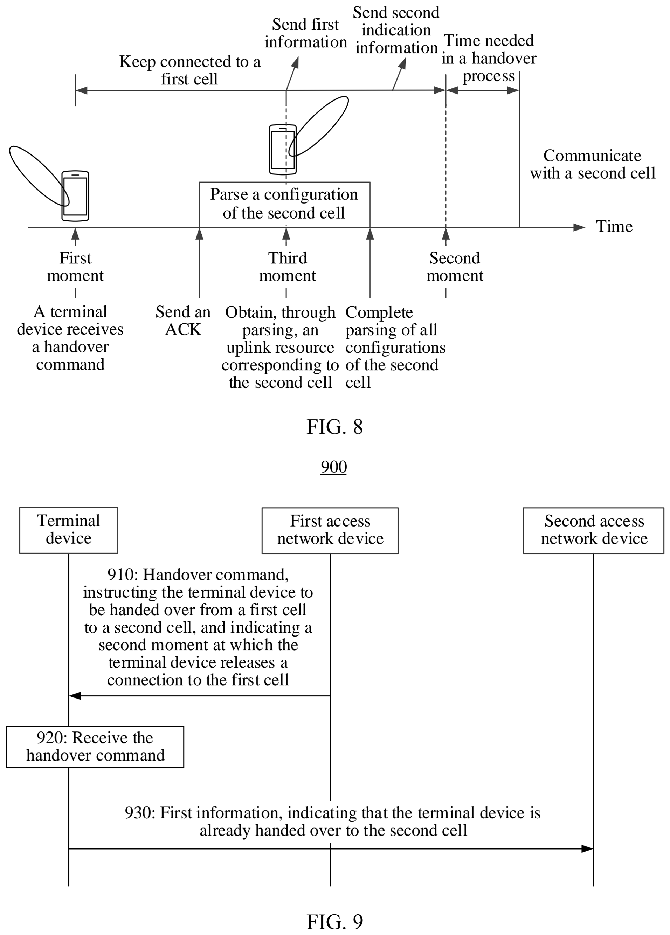

FIG. 8 is a diagram of another example of a handover method according to an embodiment of this application. In this example, a first cell and a second cell are intra-frequency cells, a second moment is later than a third moment, the second moment is a start moment that is of a time domain resource included in an uplink resource corresponding to the second cell and that is after a terminal device obtains the uplink resource corresponding to the second cell, and the third moment is a moment at which the terminal device obtains the uplink resource corresponding to the second cell.

The terminal device keeps connected to the first cell within a time period from a first moment to the second moment, where the first moment is a moment at which the terminal device receives a handover command from a first access network device. The terminal device sends second indication information to the first access network device before being disconnected from the first access network device, where the second indication information indicates remaining connection time between the terminal device and the first cell or the second moment, to avoid a case in which the first access network device resumes a connection between the terminal device and the first cell after the terminal device is disconnected from the first cell, thereby reducing overheads and power consumption of the first access network device.

The terminal device sends first information to a second access network device at the third moment at which the terminal device obtains/obtains, through parsing, the uplink resource corresponding to the second cell, where the first information indicates that the terminal device is to be handed over to the second cell served by the second access network device. The terminal device performs, starting from the second moment, a handover process of being handed over from the first cell to the second cell. The terminal device communicates with the second cell after completing the handover process. Optionally, the terminal device sends an ACK message to the first access network device after the terminal device receives the handover command from the first access network device, where the ACK message indicates that the terminal device already receives the handover command.

FIG. 9 is a schematic flowchart of interaction of another handover method 900 according to an embodiment of this application. In this embodiment of this application, a first access network device may be referred to as a source access network device or a source base station, and a second access network device may be referred to as a target access network device or a target base station. In this embodiment, an uplink resource corresponding to a second cell may be parsed by the first access network device, and the first access network device may learn of a start moment of an uplink resource that corresponds to the second cell and that is closest to a current slot.

910: The first access network device sends a handover command to a terminal device, where the handover command instructs the terminal device to be handed over from a first cell to the second cell, and indicates a second moment at which the terminal device releases a connection to the first cell, the second moment is later than a moment at which the first access network device sends the handover command, the first access network device is a current serving access network device of the terminal device, the first cell is a cell served by the first access network device, and the second cell is a cell served by the second access network device.

920: The terminal device receives the handover command from the first access network device, and the terminal device releases the connection to the first cell at the second moment based on the handover command, where the second moment is later than the first moment at which the terminal device receives the handover command. The terminal device keeps connected to the first cell within a time period from the first moment to the second moment, to avoid a case in which the terminal device immediately is disconnected from the first cell after receiving the handover command, thereby reducing communication interruption time.

Optionally, the second moment is determined by the first access network device based on the uplink resource corresponding to the second cell. For example, the second moment is determined by the first access network device based on a time domain resource included in the uplink resource corresponding to the second cell. The uplink resource corresponding to the second cell is periodic, for example, the second moment is a start moment of an uplink resource that corresponds to the second cell and that is closest to the moment at which the first access network device sends the handover command, or the second moment is a start moment of an uplink resource that corresponds to the second cell and that is closest to the first moment at which the terminal device receives the handover command.

Optionally, before the first access network device sends the handover command to the terminal device, the first access network device sends, to the terminal device, the uplink resource corresponding to the second cell. Correspondingly, the terminal device receives, from the first access network device, the uplink resource corresponding to the second cell.

Optionally, before the first access network device sends, to the terminal device, the uplink resource corresponding to the second cell, the second access network device sends, to the first access network device, the uplink resource corresponding to the second cell. Correspondingly, the first access network device receives, from the second access network device, the uplink resource corresponding to the second cell. The uplink resource corresponding to the second cell may be obtained by the first access network device by actively requesting the second access network device based on measurement report information reported by the terminal device.

Optionally, in addition to sending, to the first access network device, the uplink resource corresponding to the second cell, the second access network device may further send, to the first access network device, frame boundary offset (frame boundary offset) information between the second cell and the first cell, so that the first access network device may determine a specific location of the uplink resource corresponding to the second cell. A meaning of the frame boundary offset includes: There may be a time difference between system frames 0 of different access network devices. A start time point of a specific system frame of a cell is used as a reference, and there may be a time difference between the reference point and the closest system frame of another cell, where the time difference is referred to as the frame boundary offset.

Optionally, before the first access network device sends the handover command to the terminal device, the terminal device sends a random access request to the second access network device. Correspondingly, the second access network device receives the random access request sent by the terminal device. In a possible implementation, after receiving the random access request sent by the terminal device, the second access network device sends a random access response to the terminal device, where the random access response includes an uplink timing advance corresponding to the second cell. In another possible implementation, after receiving the random access request sent by the terminal device, the second access network device does not send a random access response to the terminal device, and the second access network device sends, to the first access network device, an uplink timing advance corresponding to the second cell; and after receiving the uplink timing advance that corresponds to the second cell and that is sent by the second access network device, the first access network device sends, to the terminal device by using the handover command, the uplink timing advance corresponding to the second cell.

Optionally, the first access network device and the second access network device may be a same access network device, or may be different access devices; and the first access network device and the second access network device may be different DUs in a same access network device. The first cell and the second cell may be different cells served by a same access network device, or may be different cells served by different access network devices.

Optionally, the terminal device sends an ACK message to the first access network device after receiving the handover command from the first access network device, where the ACK message indicates that the terminal device receives the handover command. Correspondingly, the first access network device receives the ACK message from the terminal device.

930: The terminal device sends first information to the second access network device at a third moment, where the first information indicates that the terminal device is already handed over to the second cell, and the third moment is later than the first moment.

In this embodiment of this application, that the terminal device is already handed over to the second cell may be understood as at least one of the following: The terminal device is to be handed over to the second cell; the terminal device starts to be handed over to the second cell; the terminal device already completes RRC reconfiguration; or the terminal device completes radio frequency switching after obtaining the uplink resource corresponding to the second cell.

Correspondingly, the second access network device receives the first information from the terminal device, and the second access network device may determine, based on the first information, that the terminal device is already handed over to the second cell served by the second access network device, to avoid a case in which the second access network device does not know when the terminal device is handed over to the second cell served by the second access network device.

For example, the first information may indicate that the terminal device obtains the uplink resource corresponding to the second cell. The second access network device may learn, based on the first information, that the terminal device obtains the uplink resource corresponding to the second cell, to determine that the terminal device is already handed over to the second cell.

Optionally, the terminal device sends the first information to the second access network device at the third moment by using the uplink resource corresponding to the second cell and the uplink timing advance corresponding to the second cell. Correspondingly, the second access network device receives the first information from the terminal device based on the uplink resource corresponding to the second cell and the uplink timing advance corresponding to the second cell.

Optionally, before the terminal device sends the first information to the second access network device, the terminal device obtains the uplink timing advance corresponding to the second cell. For example, the terminal device may obtain the uplink timing advance corresponding to the second cell in any one of the following manners: The first access network device sends, to the terminal device by using the handover command, the uplink timing advance corresponding to the second cell; and before receiving the handover command, the terminal device obtains, by using a random access process, the uplink timing advance corresponding to the second cell; or the terminal device obtains, by measuring a downlink reference signal, the uplink timing advance corresponding to the second cell.

Optionally, the third moment includes any one of the following: a moment at which the terminal device obtains the uplink resource corresponding to the second cell; or a moment at which the terminal device completes radio frequency switching after obtaining the uplink resource corresponding to the second cell. The moment at which the terminal device obtains the uplink resource corresponding to the second cell may be understood as a moment at which the terminal device receives the uplink resource corresponding to the second cell and completes parsing of the uplink resource corresponding to the second cell. "Radio frequency switching" in this embodiment of this application may be understood as "carrier switching", that a radio frequency component of the terminal device adjusts a working frequency, or a similar concept defined in another protocol.

When the first cell and the second cell are intra-frequency cells, the third moment includes the moment at which the terminal device obtains the uplink resource corresponding to the second cell, and the terminal device may send the first information to the second access network device without performing radio frequency switching. When the first cell and the second cell are inter-frequency cells, the third moment includes the moment at which the terminal device completes radio frequency switching after obtaining the uplink resource corresponding to the second cell, and the terminal device can send the first information to the second access network device only after completing the radio frequency switching. Optionally, the second moment and the third moment may be a same moment, and the second moment may be later than the third moment.

Optionally, the third moment may further include one or more of the following:
later than a moment at which the terminal device obtains the uplink resource corresponding to the second cell;
later than a moment at which the terminal device completes radio frequency switching after obtaining the uplink resource corresponding to the second cell;
a moment whose time interval with the moment at which the terminal device obtains the uplink resource corresponding to the second cell is greater than or equal to a second preset threshold, where the third moment is later than the moment at which the terminal device obtains the uplink resource corresponding to the second cell; or
a moment whose time interval with the moment at which the terminal device completes radio frequency switching after obtaining the uplink resource corresponding to the second cell is greater than or equal to the second preset threshold, where the third moment is later than the moment at which the terminal device completes the radio frequency switching after obtaining the uplink resource corresponding to the second cell, and the second preset threshold may be predefined, or may be indicated by the first access network device to the terminal device.

In the technical solution provided in this embodiment of this application, the handover command sent by the first access network device to the terminal device instructs the terminal device to be handed over from the first cell to the second cell, and indicates the second moment at which the terminal device releases the connection to the first cell, where the second moment is determined by the first access network device based on the uplink resource corresponding to the second cell, and the terminal device keeps connected to the first cell within the time period from the first moment to the second moment based on the handover command, to avoid a case in which the terminal device immediately is disconnected from the first cell after receiving the handover command, thereby reducing communication interruption time. In addition, the terminal device sends the first information to the second access network device at the third moment, where the first information indicates that the terminal device is already handed over to the second cell, and the third moment is later than the first moment; and the second access network device may determine, based on the first information, that the terminal device is already handed over to the second cell served by the second access network device, to avoid a case in which the second access network device does not know when the terminal device is handed over to the second cell served by the second access network device.

Optionally, the second access network device sends, to the first access network device, the uplink resource corresponding to the second cell. Correspondingly, the first access network device receives, from the second access network device, the uplink resource corresponding to the second cell. The uplink resource corresponding to the second cell may be obtained by the first access network device by actively requesting the second access network device based on the measurement report information reported by the terminal device. The first access network device sends, to the terminal device, the uplink resource corresponding to the second cell. Correspondingly, the terminal device receives, from the first access network device, the uplink resource corresponding to the second cell. The first access network device sends the handover command to the terminal device at a fourth moment, where the handover command instructs the terminal device to be handed over from the first cell to the second cell, the fourth moment is determined by the first access network device based on the uplink resource corresponding to the second cell, and the fourth moment may be slightly earlier than the second moment. Correspondingly, the terminal device immediately is disconnected from the first cell after receiving the handover command sent by the first access network device at the fourth moment. The terminal device sends the first information to the second access network device at the third moment, where the first information indicates that the terminal device is already handed over to the second cell, and the third moment is later than the first moment. Correspondingly, the second access network device receives the first information from the terminal device. For example, the second moment is a start moment of an uplink resource that corresponds to the second cell and that is closest to the moment at which the first access network device sends the handover command, or the second moment is a start moment of an uplink resource that corresponds to the second cell and that is closest to the first moment at which the terminal device receives the handover command.

In this optional solution, the first access network device may determine, based on the uplink resource corresponding to the second cell, the second moment at which the terminal device releases the connection to the first cell. The first access device sends the handover command to the terminal device at the fourth moment. The terminal device immediately is disconnected from the first cell after receiving the handover command. The first access network device controls the moment at which the handover command is delivered, to reduce communication interruption time of the terminal device. In addition, the second access network device may determine, based on the first information sent by the terminal device, that the terminal device is already handed over to the second cell served by the second access network device, to avoid a case in which the second access network device does not know when the terminal device is handed over to the second cell served by the second access network device.

In an open radio access network (open radio access network, ORAN) scenario, sending or receiving operations of different access network devices in the foregoing embodiments may be implemented by a CU, a DU, or an RU.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that, in the foregoing embodiments, the method and/or the steps implemented by the transmitting end may also be implemented by a component (for example, a chip or a circuit) that may be used by the transmitting end, and the method and/or the steps implemented by the receiving end may also be implemented by a component that may be used by the receiving end.

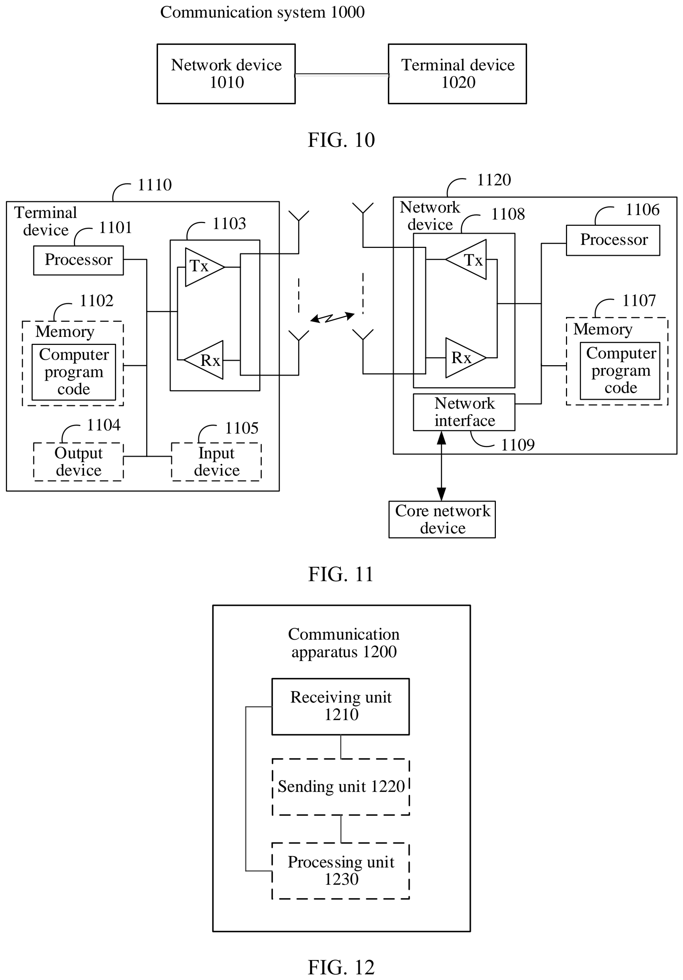

Based on a same technical concept as the foregoing handover method, FIG. 10 is a diagram of a communication system 1000 according to an embodiment of this application. As shown in FIG. 10, the communication system includes a network device 1010 and a terminal device 1020. The network device 1010 and the terminal device 1020 may implement the methods described in the foregoing method embodiments. The network device 1010 may be the foregoing first access network device.

Optionally, FIG. 11 is a diagram of structures of a terminal device 1110 and a network device 1120 according to an embodiment of this application. The network device 1120 may be a first access network device, or may be located in a first access network device.

The terminal device 1110 includes at least one processor (an example in which one processor 1101 is included is used for description in FIG. 11) and at least one transceiver (an example in which one transceiver 1103 is included is used for description in FIG. 11). Optionally, the terminal device 1110 may further include at least one memory (an example in which one memory 1102 is included is used for description in FIG. 11), at least one output device (an example in which one output device 1104 is included is used for description in FIG. 11), and at least one input device (an example in which one input device 1105 is included is used for description in FIG. 11).

The processor 1101, the memory 1102, and the transceiver 1103 are connected to each other through a communication line. The communication line may include a path for transmission of information between the foregoing components.

The processor 1101 may be a general-purpose central processing unit (central processing unit, CPU), a microprocessor, an application-specific integrated circuit (application-specific integrated circuit, ASIC), one or more integrated circuits configured to control program execution of the solutions of this application, a general-purpose processor, a digital signal processor (digital signal processor, DSP), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be in a storage medium, and the storage medium is located in the memory 1102.

The memory 1102 may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification includes but is not limited to these memories and any memory of another proper type. The memory may independently exist and may be connected to the processor through a communication line. The memory may alternatively be integrated with the processor.

The memory 1102 is configured to store computer-executable instructions used to implement the solutions of this application, and execution is controlled by the processor 1101. The processor 1101 is configured to execute the computer-executable instructions stored in the memory 1102, to implement a handover method provided in the following embodiments of this application.

Optionally, the computer-executable instructions in embodiments of this application may also be referred to as application program code or computer program code or instructions. This is not specifically limited in embodiments of this application.

The output device 1104 communicates with the processor 1101, and may display information in a plurality of manners. For example, the output device 1104 may be a liquid crystal display (liquid crystal display, LCD), a light-emitting diode (light-emitting diode, LED) display device, a cathode ray tube (cathode ray tube, CRT) display device, a projector (projector), or the like. The input device 1105 communicates with the processor 1101, and may receive an input of a user in a plurality of manners. For example, the input device 306 may be a mouse, a keyboard, a touchscreen device, a sensor device, or the like.

The transceiver 1103 may use any transceiver-type apparatus, and is configured to communicate with another device or a communication network such as the Ethernet, a radio access network (radio access network, RAN), a wireless local area network (wireless local area network, WLAN), or the like. The transceiver 1103 includes a transmitter (transmitter, Tx) and a receiver (receiver, Rx).

The memory 1102 may independently exist and may be connected to the processor 1101 through a communication line. The memory 1102 may alternatively be integrated with the processor 1101.

The memory 1102 is configured to store computer-executable instructions used to implement the solutions of this application, and execution is controlled by the processor 1101. Specifically, the processor 1101 is configured to execute the computer-executable instructions stored in the memory 1102, to implement the handover method in embodiments of this application.

Alternatively, optionally, in embodiments of this application, the processor 1101 may perform processing-related functions in the signal generation method provided in the following embodiments of this application, and the transceiver 1103 is responsible for communication with another device or a communication network. This is not limited in embodiments of this application.

The network device 1120 includes at least one processor (an example in which one processor 1106 is included is used for description in FIG. 11), at least one transceiver (an example in which one transceiver 1108 is included is used for description in FIG. 11), and at least one network interface (an example in which one network interface 1109 is included is used for description in FIG. 11). Optionally, the network device 1120 may further include at least one memory (an example in which one memory 1107 is included is used for description in FIG. 11). The processor 1106, the memory 1107, the transceiver 1108, and the network interface 1109 are connected through a communication line. The network interface 1109 is configured to be connected to a core network device through a link (for example, an S1 interface), or connected to a network interface of another network device through a wired or wireless link (for example, an X2 interface) (not shown in FIG. 11). This is not specifically limited in embodiments of this application. In addition, for related descriptions of the processor 1106, the memory 1107, and the transceiver 1108, refer to the descriptions of the processor 1101, the memory 1102, and the transceiver 1103 in the terminal device 1110. Details are not described herein again.

It may be understood that the structure shown in FIG. 11 does not constitute a specific limitation on the terminal device 1110 and the network device 1120. For example, in some other embodiments of this application, the terminal device 1110 or the network device 1120 may include more or fewer components than those shown in the figure, or combine some components, or split some components, or have different component arrangements. The components shown in the figure may be implemented by hardware, software, or a combination of software and hardware.

Based on a same technical concept as the foregoing handover method, an embodiment of this application further provides a communication apparatus. FIG. 12 is a schematic block diagram of a communication apparatus 1200 according to an embodiment of this application. The apparatus may be used in the terminal device in the method embodiment in FIG. 4, or may be located in the terminal device. The communication apparatus 1200 includes:
a receiving unit 1210, configured to receive a handover command from a first access network device, where the handover command instructs the communication apparatus to be handed over from a first cell to a second cell, the communication apparatus keeps connected to the first cell within a time range from a first moment to a second moment, the first moment is a moment at which the communication apparatus receives the handover command, the second moment is later than the first moment, the first access network device is a current serving access network device of the communication apparatus, and the first cell is a cell served by the first access network device. In a possible implementation, the communication apparatus 1200 further includes a sending unit 1220, configured to send first information to a second access network device at a third moment, where the first information indicates that the communication apparatus is already handed over to the second cell, the second cell is a cell served by the second access network device, and the third moment is later than the first moment.

In a possible implementation, the communication apparatus 1200 further includes a processing unit 1230, configured to keep, according to the handover command, the communication apparatus connected to the first cell within the time range from the first moment to the second moment.

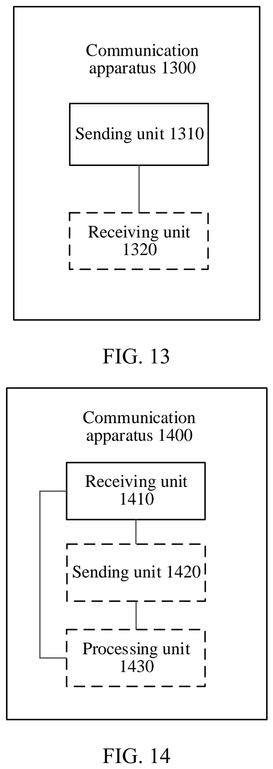

FIG. 13 is a schematic block diagram of another communication apparatus 1300 according to an embodiment of this application. The apparatus may be used in the first access network device in the method embodiment in FIG. 4, or may be located in the first access network device. The communication apparatus 1300 includes:
a sending unit 1310, configured to send a handover command to a terminal device, where the handover command instructs the terminal device to be handed over from a first cell to a second cell, the terminal device keeps connected to the first cell within a time range from a first moment to a second moment, the first moment is a moment at which the terminal device receives the handover command, the second moment is later than the first moment, the communication apparatus is a current serving access network device of the terminal device, the first cell is a cell served by the communication apparatus, and the second cell is a cell served by a second access network device.

In a possible implementation, the communication apparatus 1300 further includes a receiving unit 1320, configured to receive second indication information from the terminal device, where the second indication information indicates remaining connection time between the terminal device and the first cell or the second moment, and the remaining connection time is determined by the terminal device based on an uplink resource corresponding to the second cell.

FIG. 14 is a schematic block diagram of another communication apparatus 1400 according to an embodiment of this application. The apparatus may be used in the terminal device in the method embodiment in FIG. 9, or may be located in the terminal device. The communication apparatus 1400 includes a receiving unit 1410, configured to receive a handover command from a first access network device, where the handover command instructs the communication apparatus to be handed over from a first cell to a second cell, and indicates a second moment at which the communication apparatus releases a connection to the first cell, the second moment is later than a first moment at which the communication apparatus receives the handover command, the first access network device is a current serving access network device of the communication apparatus, and the first cell is a cell served by the first access network device.

In a possible implementation, the second moment is determined by the first access network device based on an uplink resource corresponding to the second cell.

In a possible implementation, the receiving unit 1410 is further configured to receive, from the first access network device, the uplink resource corresponding to the second cell.

In a possible implementation, the communication apparatus 1400 further includes a sending unit 1420, configured to send first information to a second access network device at a third moment, where the first information indicates that the communication apparatus is already handed over to the second cell, the third moment is later than the first moment, and the second cell is a cell served by the second access network device.

In a possible implementation, the communication apparatus 1400 further includes a processing unit 1430, configured to release a connection to the first cell at the second moment according to the handover command.

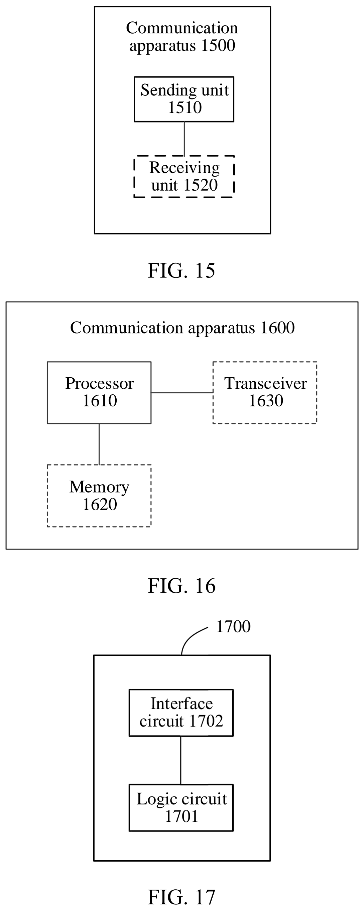

FIG. 15 is a schematic block diagram of another communication apparatus 1500 according to an embodiment of this application. The apparatus may be used in the first access network device in the method embodiment in FIG. 9, or may be located in the first access network device. The communication apparatus 1500 includes:

The sending unit 1510 is further configured to send a handover command to the terminal device, where the handover command instructs the terminal device to be handed over from a first cell to a second cell, and indicates a second moment at which the terminal device releases a connection to the first cell, the second moment is later than a moment at which the communication apparatus sends the handover command, the communication apparatus is a current serving access network device of the terminal device, and the first cell is a cell served by the communication apparatus.

In a possible implementation, the sending unit 1510 is further configured to send, to the terminal device, an uplink resource corresponding to the second cell, where the second cell is a cell served by a second access network device.

In a possible implementation, the communication apparatus 1500 further includes a receiving unit 1520, configured to receive, from the second access network device, the uplink resource corresponding to the second cell.

The receiving unit and the sending unit in the embodiments in FIG. 12 to FIG. 15 of this application may form a transceiver unit, configured to implement receiving and sending operations in the method embodiments, and other operations are implemented by a processing unit.

It should be noted that division into the units in embodiments of this application is an example, and is merely logical function division. During actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit. For example, the transceiver unit may include a receiving unit and/or a sending unit.

When the integrated unit is implemented in the form of a software functional unit and sold or used as an independent product, the integrated unit may be stored in a computer-readable storage medium. Based on such an understanding, the integrated unit may be stored in a storage medium as a computer software product, and includes several instructions for instructing a computer device (which may be a personal computer, a server, or a network device) or a processor (processor) to perform all or some of the steps of the methods in embodiments of this application.

FIG. 16 is a schematic block diagram of another communication apparatus 1600 according to an embodiment of this application. The communication apparatus 1600 includes a processor 1610. The processor 1610 is coupled to a memory 1620. The memory 1620 is configured to store a computer program or instructions and/or data. The processor 1610 is configured to execute the computer program or the instructions and/or the data stored in the memory 1620, so that the methods in the foregoing method embodiments are performed. The communication apparatus 1600 is configured to implement operations performed by the terminal device or the first access network device in the foregoing method embodiments.

Optionally, the communication apparatus 1600 includes one or more processors 1610.

Optionally, as shown in FIG. 16, the communication apparatus 1600 may further include the memory 1620.

Optionally, the communication apparatus 1600 may include one or more memories 1620.

Optionally, the memory 1620 and the processor 1610 may be integrated together, or are separately disposed.

Optionally, as shown in FIG. 16, the communication apparatus 1600 may further include a transceiver 1630. The transceiver 1630 may include a receiver and/or a transmitter, which are/is configured to receive and/or send a signal. For example, the processor 1610 is configured to control the transceiver 1630 to receive and/or send the signal.

Optionally, when the communication apparatus 1600 is a chip, the communication apparatus 1600 may include only the processor 1610. Further, the communication apparatus 1600 may further include the transceiver 1630, which is used as an input/output interface of the processor 1610. The transmitter is an output interface, and the receiver is an input interface.

An embodiment of this application further provides a computer-readable medium. The computer-readable medium stores a computer program, and when the computer program is executed by a computer, the handover method according to any one of the foregoing method embodiments is implemented.

An embodiment of this application further provides a computer program product, including a computer program. When the computer program is executed by a computer, the handover method according to any one of the foregoing method embodiments is implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, all or some of the procedures or functions according to embodiments of this application are generated. The computer may be the foregoing communication apparatus. The computer instructions may be stored in a computer-readable storage medium, or may be transmitted from one computer-readable storage medium to another computer-readable storage medium. The computer-readable storage medium may be the foregoing storage medium or the foregoing memory.

FIG. 17 is a diagram of a structure of another communication apparatus 1700 according to an embodiment of this application. The communication apparatus shown in FIG. 17 includes a logic circuit 1701 and an interface circuit 1702. In other words, the foregoing processor may be implemented by using the logic circuit 1701, and the sending unit, the receiving unit, or the transceiver may be implemented by using the interface circuit 1702. The logic circuit 1701 may be a chip, a processing circuit, an integrated circuit, a system-on-chip (system-on-chip, SoC), or the like. The interface circuit 1702 may be a communication interface, an input/output interface, or the like. In embodiments of this application, the logic circuit and the interface circuit may be coupled to each other. A specific connection manner of the logic circuit and the interface circuit is not limited in embodiments of this application.

In some embodiments of this application, the logic circuit and the interface circuit may be configured to perform functions, operations, or the like performed by the network device or the terminal device. For the functions or operations performed by the network device or the terminal device, refer to the foregoing method embodiment. Details are not described herein again.

"And/Or" in this application describes an association relationship between associated objects and represents that three relationships may exist. For example, A and/or B may represent the following three cases: Only A exists, both A and B exist, and only B exists. The character "/" generally indicates an "or" relationship between the associated objects.

In this application, "at least one" means one or more, and "a plurality of" means two or more.

In addition, it should be understood that in descriptions of this application, terms such as "first" and "second" are merely used for distinguishing and description, but should not be understood as indicating or implying relative importance, or should not be understood as indicating or implying a sequence.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware, or a combination thereof. When this application is implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a computer.

In conclusion, the foregoing descriptions are merely embodiments of the technical solutions of this application, but are not intended to limit the protection scope of this application. Any modification, equivalent replacement, improvement, or the like made within the principle of this application should fall within the protection scope of this application.

## Claims

1. A handover method, comprising:
receiving, by a terminal device, a handover command from a first access network device, wherein the handover command instructs the terminal device to be handed over from a first cell to a second cell, the terminal device keeps connected to the first cell within a time range from a first moment to a second moment, the first moment is a moment at which the terminal device receives the handover command, the second moment is later than the first moment, the first access network device is a current serving access network device of the terminal device, and the first cell is a cell served by the first access network device.

2. The method according to claim 1, wherein the method further comprises:
sending, by the terminal device, first information to a second access network device at a third moment, wherein the first information indicates that the terminal device is already handed over to the second cell, the second cell is a cell served by the second access network device, and the third moment is later than the first moment.

3. The method according to claim 1 or 2, wherein the method further comprises:
receiving, by the terminal device, second information from the first access network device, wherein the second information comprises an uplink resource corresponding to each of at least one candidate cell, and the at least one candidate cell comprises the second cell.

4. The method according to claim 2, wherein the sending, by the terminal device, the first information to the second access network device at the third moment comprises:
sending, by the terminal device, the first information to the second access network device at the third moment by using an uplink resource corresponding to the second cell and an uplink timing advance corresponding to the second cell.

5. The method according to any one of claims 2 to 4, wherein the third moment comprises any one of the following:
a moment at which the terminal device obtains the uplink resource corresponding to the second cell; or
a moment at which the terminal device completes radio frequency switching after obtaining the uplink resource corresponding to the second cell.

6. The method according to any one of claims 1 to 5, wherein the method further comprises:
sending, by the terminal device, second indication information to the first access network device, wherein the second indication information indicates remaining connection time between the terminal device and the first cell or the second moment, and the remaining connection time is determined by the terminal device based on the uplink resource corresponding to the second cell.

7. A handover method, comprising:
sending, by a first access network device, a handover command to a terminal device, wherein the handover command instructs the terminal device to be handed over from a first cell to a second cell, the terminal device keeps connected to the first cell within a time range from a first moment to a second moment, the first moment is a moment at which the terminal device receives the handover command, the second moment is later than the first moment, the first access network device is a current serving access network device of the terminal device, the first cell is a cell served by the first access network device, and the second cell is a cell served by a second access network device.

8. The method according to claim 7, wherein the method further comprises:
sending, by the first access network device, second information to the terminal device, wherein the second information comprises an uplink resource corresponding to each of at least one candidate cell, and the at least one candidate cell comprises the second cell.

9. The method according to claim 7 or 8, wherein the method further comprises:
receiving, by the first access network device, second indication information from the terminal device, wherein the second indication information indicates remaining connection time between the terminal device and the first cell or the second moment, and the remaining connection time is determined by the terminal device based on an uplink resource corresponding to the second cell.

10. The method according to claim 1 or 7, wherein the second moment comprises one or more of the following:
a moment at which the terminal device obtains an uplink resource corresponding to the second cell;
a start moment of a time domain resource comprised in the uplink resource that corresponds to the second cell and that is obtained by the terminal device;
a moment at which the terminal device receives first indication information from the first access network device, wherein the first indication information indicates the terminal device to release a connection to the first cell; or
a moment whose time interval with the first moment is greater than or equal to a preset time period.

11. A handover method, comprising:
receiving, by a terminal device, a handover command from a first access network device, wherein the handover command instructs the terminal device to be handed over from a first cell to a second cell, and indicates a second moment at which the terminal device releases a connection to the first cell, the second moment is later than a first moment at which the terminal device receives the handover command, the first access network device is a current serving access network device of the terminal device, and the first cell is a cell served by the first access network device.

12. The method according to claim 11, wherein
the second moment is determined by the first access network device based on an uplink resource corresponding to the second cell.

13. The method according to claim 11 or 12, wherein the method further comprises:
receiving, by the terminal device from the first access network device, the uplink resource corresponding to the second cell.

14. The method according to any one of claims 11 to 13, wherein the method further comprises:
sending, by the terminal device, first information to a second access network device at a third moment, wherein the first information indicates that the terminal device is already handed over to the second cell, the third moment is later than the first moment, and the second cell is a cell served by the second access network device.

15. The method according to claim 14, wherein the sending, by the terminal device, the first information to the second access network device at the third moment comprises:
sending, by the terminal device, the first information to the second access network device at the third moment by using the uplink resource corresponding to the second cell and an uplink timing advance corresponding to the second cell.

16. The method according to claim 14 or 15, wherein the third moment comprises any one of the following:
a moment at which the terminal device obtains the uplink resource corresponding to the second cell; or
a moment at which the terminal device completes radio frequency switching after obtaining the uplink resource corresponding to the second cell.

17. A handover method, comprising:
sending, by a first access network device, a handover command to a terminal device, wherein the handover command instructs the terminal device to be handed over from a first cell to a second cell, and indicates a second moment at which the terminal device releases a connection to the first cell, the second moment is later than a moment at which the first access network device sends the handover command, the first access network device is a current serving access network device of the terminal device, and the first cell is a cell served by the first access network device.

18. The method according to claim 17, wherein
the second moment is determined by the first access network device based on an uplink resource corresponding to the second cell.

19. The method according to claim 17 or 18, wherein the method further comprises:
sending, by the first access network device to the terminal device, the uplink resource corresponding to the second cell, wherein the second cell is a cell served by a second access network device.

20. The method according to any one of claims 17 to 19, wherein the method further comprises:
receiving, by the first access network device from the second access network device, the uplink resource corresponding to the second cell.

21. A communication apparatus, comprising a unit configured to perform the method according to any one of claims 1 to 20.

22. A communication system, wherein the communication system comprises a terminal device and a first access network device, the terminal device is configured to implement the method according to any one of claims 1 to 6 or 11 to 16, and the first access network device is configured to implement the method according to any one of claims 7 to 10 or 17 to 20.

23. A communication apparatus, comprising a processor, wherein the processor is configured to execute a computer program or computer instructions in a memory, to perform the method according to any one of claims 1 to 20.

24. A computer-readable storage medium, comprising a computer program or instructions, wherein when the computer program or the instructions are run on a computer, the method according to any one of claims 1 to 20 is enabled to be performed.
